(19) Europäisches Patentamt
European Patent Office
Office européen des brevets

(11) EP 3 475 313 B1

(12) **EUROPEAN PATENT SPECIFICATION**

(45) Date of publication and mention of the grant of the patent:
**20.03.2024 Bulletin 2024/12**

(21) Application number: **17730502.6**

(22) Date of filing: **20.06.2017**

(51) International Patent Classification (IPC):
***C08F 2/00*** *(2006.01)* ***C08L 23/06*** *(2006.01)*
***C08L 23/08*** *(2006.01)* ***C08L 23/16*** *(2006.01)*

(52) Cooperative Patent Classification (CPC):
(C-Sets available)
**C08L 23/06; C08L 23/0815; C08L 23/16;**
C08L 2203/18; C08L 2205/025; C08L 2205/03;
C08L 2207/02 (Cont.)

(86) International application number:
**PCT/EP2017/065056**

(87) International publication number:
**WO 2017/220558 (28.12.2017 Gazette 2017/52)**

(54) **COMPOSITION COMPRISING THREE POLYETHYLENES AND A PROCESS FOR PRODUCTION OF THE POLYMER COMPOSITION**

ZUSAMMENSETZUNG DREIER POLYETHYLENE UND VERFAHREN ZUR HERSTELLUNG EINER POLYMERZUSAMMENSETZUNG

COMPOSITION DES TROIS POLYETHYLENES ET PROCÉDÉ DE PRODUCTION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2016 EP 16175657**

(43) Date of publication of application:
**01.05.2019 Bulletin 2019/18**

(73) Proprietor: **Borealis AG**
**1020 Vienna (AT)**

(72) Inventors:
- **LIU, Yi**
  **4209 Engerwitzdorf (AT)**
- **DOU, Gizheng**
  **4030 Linz (AT)**
- **SUMERIN, Victor**
  **00980 Helsinki (FI)**
- **AHO, Jani**
  **00910 Helsinki (FI)**
- **KELA, Jarmo**
  **06101 Porvoo (FI)**
- **HJERTBERG, Thomas**
  **432 56 Kungshamn (SE)**
- **HJÄRTFORS, Anna**
  **442 41 Kungälv (SE)**

(74) Representative: **Maiwald GmbH**
**Elisenhof**
**Elisenstraße 3**
**80335 München (DE)**

(56) References cited:
**EP-A1- 2 570 455 EP-A1- 2 860 204**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 2/001;**
**C08F 210/16, C08F 4/6492;**
**C08F 210/16, C08F 4/651;**
**C08F 210/16, C08F 4/6543;**
**C08F 210/16, C08F 4/6555;**
**C08F 210/16, C08F 210/08, C08F 210/14, C08F 2500/12, C08F 2500/03;**
**C08L 23/06, C08L 23/0815;**
**C08L 23/06, C08L 23/16;**
**C08L 23/0815, C08L 23/06;**
**C08L 23/16, C08L 23/06**

## Description

## BACKGROUND OF THE INVENTION

This disclosure relates generally to a polymer composition and a process for production of the polymer composition. Especially, the disclosure relates to a multimodal ethylene composition comprising at least three polymer components, which are a first high molecular weight polyethylene component, a low molecular weight polyethylene component having a weight average molecular weight lower than a weight average molecular weight of the first high molecular weight polyethylene component and a second high molecular weight polyethylene component having a weight average molecular weight higher than the weight average molecular weight of the low molecular weight polyethylene component, but the weight average molecular weight of the second high molecular weight component being different from the weight average molecular weight of the first high molecular weight component. Also the disclosure relates to an article, such as a pipe or fitting, made of the polymer composition and a use of the polymer composition for the production of the article.

The high molecular weight (HMW) component provides improved mechanical properties to the composition. The high molecular weight component's density may be lower than 940 kg/$m^3$. When increasing the molecular weight of the component mechanical properties of the composition can be improved. Instead the low molecular weight (LMW) component provides good processability. The density of the low molecular weight component is typically greater than 940 kg/$m^3$. Using both high molecular weight components together with low molecular weight components may result in a loss of homogeneity, because the viscosity ratio between the high molecular weight components and the low molecular weight components is increasing. The loss of homogeneity may be detrimental to the mechanical properties of the articles.

It is well-known to add the ultra-high molecular weight (UHMW) component into the composition of the low and high molecular weight components to further improve the mechanical properties. Typically a molecular weight of ultra-high molecular weight polyethylene is greater than 3 million. The density of the ultra-high molecular weight polyethylene may be less than 935 kg/$m^3$. However, there are serious compatibility problems due to the ultra-high molecular weight component. For example, Ogunniyi et al (Journal of Applied Polymer Science, 2005, 97, 413-425) and Vadhar et al (Journal of Applied Polymer Science, 1986, 32, 5575-5584) both report the need for long blending times of the order of 15 minutes in a batch mixer when the ultra-high molecular weight polyethylene was added to other polyethylenes.

The incorporation of UHMW polyethylene into a polyethylene composition as a copolymer is also known and is reported in, for example, WO 2007/042216, WO 96/18677 and WO 2006/092378.

The inclusion of UHMW polyethylene into HDPE via extrusion has also been investigated and has been carried out using a co-rotating twin screw extruder by Huang and Brown (Polymer, 1992, 33, 2989-2997). However, although the UHMW polyethylene particles were found to be well bonded in the matrix and this helped to slow down the rate of crack propagation, when analysed under SEM, the UHMW polyethylene was found to remain in large separate domains with no evidence of "melting" into the HOPE matrix. For these reasons, the amount of UHMW polyethylene is limited to low loadings.

In WO 94/28064, polyethylene compositions are reported comprising a UHMW component and unimodal HOPE component.

Multimodal polymers can be used to manufacture articles having various features depending on e.g. an application and circumstances. Articles can be for instance films, fibres, cable sheathings, pipes and fittings. Pipes made from polymer compositions have many purposes of use, such as to transport liquids or gas. Typically pipes must be able to withstand pressure, because liquids or gas usually are pressurised. Polymer compositions comprising polyethylenes are nowadays frequently used for manufacturing pipes. Such polymer compositions may comprise e.g. two or more polyethylene fractions with different weight average molecular weights, frequently called multimodal and they have good chemical and physical properties. Fractions may contain ethylene homo- or copolymers. The content of comonomer can be varied as well as the type of the comonomer, which usually is alpha-olefin comonomer. The composition of each of the fractions as well as the relative proportions between fractions has significant influence on the properties of the multimodal composition. Furthermore, the polymerisation conditions, e.g. reactor types, reactant concentrations and the type of the polymerisation catalyst have a remarkable influence on properties of fractions.

EP 2799487 discloses a polyethylene composition comprising a high density multimodal polyethylene component and an ultra-high molecular weight polyethylene copolymer, which may be unimodal. The multimodal polyethylene composition may comprise a lower weight average molecular weight ethylene homopolymer or copolymer component, and a higher weight average molecular weight ethylene homopolymer or copolymer component. This blend may further comprise an ultra-high molecular weight polyethylene homopolymer component also being unimodal. A preparation made from this blend has good impact properties and the blend also has excellent processability. However, since the major examples were prepared by melt blending a bimodal PE with UHMWPE, fine adjustments of each component, i.e., the LMW, HMW and UHMPW fractions, were not explored. Pipe properties were not studied in this prior art.

GB 2498936 discloses a polyethylene having a multimodal molecular weight distribution comprising a lower molecular weight ethylene polymer, a first higher molecular weight ethylene copolymer and a second higher molecular weight ethylene copolymer. These three components are polymerised in three reactors. The object is to manufacture pipes from this polyethylene to improve a slow crack growth resistance without deleterious effect on other desired properties like a rapid crack propagation, hardness, abrasion resistance and processability. However, it did not report the properties of pipes made of the claimed materials and the disclosed impact strength is not high.

CN 103304869 discloses a multimodal polyethylene pipe resin composition comprising an ethylene homopolymer component A, an ethylene copolymer component B having an average molecular weight greater than that of the component A, and an ethylene copolymer component C having an average molecular weight greater than that of the component B. The resin was prepared in three slurry reactors in series. The polyethylene composition has a density of 935 to 945 kg/m$^3$ and MFR5 of 0.1 - 0.5 g/10 min. Pipes prepared from this composition have e.g. good pressure resistance. However, it remains silent about other crucial properties of pipes made thereof, e.g., RCP resistance, impact properties and abrasion resistance, etc. Moreover, the stress level (5.6MPa) selected for 80 °C pressure testing is not high.

WO 2000/22040 discloses a bimodal polyethylene composition for pipes comprising a low molecular weight (LMW) ethylene homopolymer fraction and a high molecular weight (HMW) ethylene comonomer fraction. While polymerising HMW component hydrogen was used to limit molecular weight of the HMW component. A critical temperature ($T_{crit}$) which is the lowest temperature at which the pipe passes the test varies from -7 to -11 °C. Impact strength at 0 °C varies from 12 to 19 kJ/m$^2$. There is still need for improved critical temperature and impact strength values.

EP 2 860 204 relates to a polyethylene composition for pipe applications comprising a base resin having a density of more than 946.0 kg/m$^3$ and equal to or less than 955.0 kg/m$^3$, wherein the composition has a $MFR_{21}$ of 1.7 to 7.0 g/10 min and a $FRR_{21/5}$ of more than 10 to equal to or less than 40. The polyethylene composition is obtainable by a multistage process, the multistage process comprising polymerizing ethylene in the presence of a silica supported Ziegler Natta catalyst in a first loop reactor, transferring a first intermediate material to a second loop reactor, further polymerizing said first intermediate material for obtaining a second intermediate material and transferring said second intermediate material to a gas phase reactor, feeding ethylene and comonomer to the gas phase reactor for obtaining a base resin, and finally extruding the base resin together with stabilizers and carbon black into the polyethylene composition.

EP 2 570 455 discloses a polyethylene composition comprising a base resin having a density of at least 948 kg/m$^3$, wherein the composition has a shear thinning index $SHI_{(2.7/210)}$ of 55 or more and 105 or less and a viscosity at a shear stress of 747 Pa ($eta_{747\ Pa}$) of 450 kPas or more.

It is desirable to have pipes of high abrasion resistance in solid and slurry transportation especially in mining and construction industries. Ultra-high molecular weight polyethylene has been used more and more in mining and sledging pipes, because it has superior abrasion resistance to high density polyethylene, but unfortunately it is much more expensive and due to high viscosity, a low extrusion speed is a disadvantage.

A pressure resistance is an important feature of pipes but the requirement for the pressure resistance depends on its end use. Typically when a density of polymer material is increasing the pressure resistance is increasing. Thus the hydrostatic pressure resistance of PE 125 resin is better than PE 100 resin. According to ISO 9080 polyethylene pipes are classified by their minimum required strength, i.e. their capacity to withstand different hoop stresses during 50 years at 20 °C without fracturing. PE 100 pipes withstand a hoop stress of 10.0 MPa (MRS10.0) and PE125 pipes withstand a hoop stress of 12.5 MPa (MRS12.5). For bimodal high density polyethylene manufactured by conventional Ziegler-Natta catalyst the improved pressure resistance is challenging as failure time may correlate positively with a material's stiffness/density and, by extrapolating, the required pressure resistance for PE 125 appears to be unachievable for a feasible stiffness/density of high density polyethylene. On the other hand, resistance to rapid crack propagation is another important property of plastic pipes.

It has now been found that a polyethylene composition comprising at least three polyethylene components having weight average molecular weights diverging from each other may have improved abrasion resistance and processability. Also improved rapid crack propagation resistance with short term pressure resistance may be achieved. The pressure resistance can be maintained at a high level.

## BRIEF DESCRIPTION OF THE INVENTION

The deficiencies, drawbacks and problems mentioned above are addressed herein and can be understood by reading the detailed account.

In an embodiment of the present invention, a polymer composition comprising a base resin includes at least three polymer components, which are a first high molecular weight polyethylene component as fraction A1, wherein a weight average molecular weight ($M_w$) of the first high molecular weight polyethylene component is at least 250000 g/mol; a low molecular weight polyethylene component as fraction A2, wherein a calculated weight average molecular weight ($M_w$) of the low molecular weight polyethylene component is at most 70000 g/mol; and a second high molecular

weight polyethylene component as fraction A3, wherein a calculated weight average molecular weight ($M_w$) of the second high molecular weight polyethylene component is at least 250000 g/mol, but the weight average molecular weight of the second high molecular weight component being different from the weight average molecular weight of the first high molecular weight component. The ratio of the weight average molecular weight and the number average molecular weight ($M_w/M_n$) of the first high molecular weight polyethylene component is greater than 5. The first high molecular weight polyethylene component of fraction A1 has a density of equal to or less than 930 kg/m$^3$, and an intrinsic viscosity of equal to or less than 15 dl/g. The base resin has a melt flow rate $MFR_5$ of equal to or less than 0.40 g/10 min and the composition has a viscosity at a shear stress of 747 Pa (eta747) of equal to or higher than 900 kPas.

In another embodiment of the present invention, a process for the production of a polyethylene composition comprising a polyethylene base resin includes steps of polymerising ethylene and optionally at least one comonomer in the presence of a polymerisation catalyst to form a first high molecular weight polyethylene component of fraction A1, wherein a weight average molecular weight ($M_w$) of the first high molecular weight polyethylene component is at least 250000 g/mol; polymerising ethylene and optionally at least one comonomer in the presence of same or different polymerisation catalyst(s) as polymerising the first very high molecular weight polyethylene component to form a low molecular weight polyethylene component of fraction A2, wherein a calculated weight average molecular weight (Mw) of the low molecular weight polyethylene component is at most 70000 g/mol; and polymerising ethylene and optionally at least one comonomer in the presence of same or different polymerisation catalyst(s) as polymerising the first very high molecular weight polyethylene component to form a high molecular weight polyethylene component of fraction A3. A calculated weight average molecular weight ($M_w$) of fraction A3 is at least 250000 g/mol, but the weight average molecular weight of the second high molecular weight component being different from the weight average molecular weight of the first high molecular weight component. At least one of the catalyst(s) is a Ziegler-Natta (ZN) catalyst. The ratio of the weight average molecular weight and the number average molecular weight ($M_w/M_n$) of the first high molecular weight polyethylene component is greater than 5. The first high molecular weight polyethylene component of fraction A1 has a density of equal to or less than 930 kg/m$^3$, and an intrinsic viscosity of equal to or less than 15 dl/g. The base resin has a melt flow rate $MFR_5$ of equal to or less than 0.40 g/10 min and the composition has a viscosity at a shear stress of 747 Pa (eta747) of equal to or higher than 900 kPas.

In yet another embodiment, the present invention provides an article, such as a pipe or fitting, made of the polyethylene composition as hereinbefore described.

In yet another embodiment, the present invention provides a use of the polyethylene composition for the production of the article as hereinbefore defined.

## DETAILED DESCRIPTION OF THE INVENTION

The following detailed description includes specific embodiments, which should not limit the scope of the invention and the embodiments can be modified as set forth in the claims.

The embodiment applies to a polyethylene composition and a process for the production of the polyethylene composition, which can be used to make articles especially pipes and fittings, but not forgetting films, fibres and cable sheathings.

In the context of the present application the term fraction denotes a polymer which has been produced in the presence of one polymerisation catalyst in one set of polymerisation conditions. Thereby three fractions may be produced by polymerising ethylene in three cascaded polymerisation reactors wherein the reactors are operated in different polymerisation conditions resulting in different molecular weights and/or comonomer contents of the polymer. Again, three fractions having different molecular weights and/or comonomer contents are produced.

The polyethylene composition comprises a base resin including at least three different polyethylene component fractions called herein fraction A1, A2 and fraction A3. Usually all polymer material of the polyethylene components is included in the base resin. Typically the amount of polymeric components or base resin is at least 90 wt% of the total polyethylene composition. The polyethylene composition may also comprise various additives, such as pigments, stabilizers (antioxidant agents), antacids and/or anti-UVs, antistatic agents and utilization agents (such as processing aid agents). Preferably the amount of these additives is 10 wt% or below, further preferred 8 wt% or below, still more preferred 4 wt% or below of the total composition. Preferably, the composition comprises carbon black in an amount of 8 wt% or below, further preferred of 1 to 4 wt%, of the total composition. Further preferred the amount of additives different from carbon black is 1.5 wt% or less, more preferably 1.0 wt% or less, most preferably 0.5 wt% or less.

Each fraction may have been produced under different polymerisation conditions, the polymer component of fraction A1 in a first polymerisation stage in a first reactor, the polymer component of fraction A2 in a second polymerisation stage in a second reactor, and the polymer component of fraction A3 in a third polymerisation stage in a third reactor resulting in different weight average molecular weights and molecular weight distributions. Typically the same polymerisation catalyst may be used in these three reactors. Also it is possible to produce under same polymerisation condition in the same reactor with bimodal catalyst two polymer components. Further fractions A1, A2 and A3 may be mixed to

produce the polyethylene base resin.

Preferably the weight average molecular weight of the first high molecular weight polyethylene component is greater than the weight average molecular weight of the second high molecular weight polyethylene component. In some cases it may be that the weight average molecular weight of the second high molecular weight polyethylene component is higher than the weight average molecular weight of the first high molecular weight polyethylene. If desired, the first high molecular weight polyethylene component may comprise very high or even ultra-high molecular weight polyethylene components. However, typically, as explained hereinbefore, the weight average molecular weight of the first high molecular weight polyethylene component is higher than the weight average molecular weight of the second high molecular weight polyethylene component.

Optionally the base resin may comprise a prepolymer fraction in an amount of up to 10 wt%, preferably up to 5 wt%, more preferably up to 3 wt%.

The composition or the base resin comprising more than one fraction is called "multimodal". If the multimodal composition comprises two fractions, it is called "bimodal" and correspondingly if it comprises three fractions, it is called "trimodal". In this specific case the composition or base resin may be trimodal, when the prepolymer fraction is not included. The form of the molecular weight distribution curve, i.e. the appearance of the graph of the polymer weight fraction as function of its molecular weight, of such a multimodal polyethylene will show two or more maxima depending on the modality or at least be distinctly broadened in comparison with the curves for the individual fractions.

The first high molecular weight polyethylene component as fraction A1 may be an ethylene homopolymer or advantageously ethylene copolymer. The low molecular weight polyethylene component as fraction A2 may be an ethylene homopolymer or copolymer. The second high molecular weight polyethylene component as fraction A3 may be an ethylene homopolymer or copolymer.

Ethylene homopolymer means a polymer which is formed essentially only repeated units deriving from ethylene. Homopolymers may, for example, comprise at least 99.9 wt% of repeat units deriving from ethylene. It is possible that minor traces of other monomers may be present as impurity.

The comonomer content of each fraction may vary, in case comonomer is present during polymerisation. Typically the comonomer content of the low molecular weight polyethylene component may be lower than the comonomer content of the second high molecular weight polyethylene component. The comonomer content of the first high molecular weight polyethylene component may be higher than the comonomer content of the low molecular weight polyethylene component. A polymeriseable olefin is called a comonomer if the weight fraction of the units derived from the olefin in the copolymer is less than the weight fraction of the units derived from ethylene. Further the comonomer molecule of fraction A1 may differ from the comonomer molecule of fraction A2 and A3. Typically the comonomer molecule of fraction A1 may be same as the comonomer molecule of fraction A2. Usually comonomers are selected from alpha-olefin comonomers with 3 - 20 carbon atoms, preferably 4-12 carbon atoms, more preferably 4-8 carbon atoms. In the embodiment the comonomer molecule of fraction A1 includes less carbon atoms than the comonomer molecule of fraction A3. Preferably the comonomer of fraction A1 is 1-butene and the comonomer of fraction A3 is 1-hexene.

The amount of fraction A1 in the base resin may be 2 to 25 wt%, preferably 3 to 20 wt%, more preferably 5 to 18 wt%.

A density of fraction A1 determined according to ISO 1183 may be equal to or less than 930 kg/m$^3$, preferably equal to or less than 929 kg/m$^3$, more preferably equal to or less than 928 kg/m$^3$. The density of fraction A1 may be equal to or more than 900 kg/m$^3$, preferably equal to or more than 905 kg/m$^3$, more preferably equal to or more than 910 kg/m$^3$.

The term molecular weight denotes herein the weight average molecular weight $M_{w.}$ The first high molecular weight polyethylene component of fraction A1 has a molecular weight $M_w$ of at least 250000 g/mol, preferably at least 280000 g/mol, more preferably at least 310000 g/mol, determined by GPC according to ISO 16014-1, 2, 4 and ASTM D 6474-12.

The molecular weight $M_w$ of the first high molecular weight polyethylene component of fraction A1 may be at most 1000000 g/mol, preferably at most 900000 g/mol, more preferably at most 800000 g/mol, determined by GPC according to ISO 16014-1, 2, 4 and ASTM D 6474-12.

The number average molecular weight $M_n$ of the first high molecular weight polyethylene component of fraction A1 may be at least 30000 g/mol, preferably at least 40000 g/mol, more preferably at least 45000 g/mol, determined by GPC according to ISO 16014-1, 2, 4 and ASTM D 6474-12.

The first high molecular weight polyethylene component of fraction A1 may have a Z average molecular weight $M_z$ at least 700000 g/mol, preferably at least 900000 g/mol, more preferably at least 1100000 g/mol, determined by GPC according to ISO 16014-1, 2, 4 and ASTM D 6474-12.

The molecular weight distribution MWD can be calculated from the ratio of the weight average molecular weight and the number average molecular weight $M_w/M_n$. The first high molecular weight polyethylene component of fraction A1 has a $M_w/M_n$ of higher than 5.0, preferably equal to or higher than 5.5, more preferably equal to or higher than 6.0, even more preferably equal to or higher than 7.0. This broad molecular weight distribution is desirable to meet advantages

of the invention which can be achieved especially when using a suitable catalyst, such as Ziegler-Natta catalyst and especially the catalyst described thoroughly hereinafter. The first high molecular weight polyethylene component may have $M_w/M_n$ of equal to or lower than 20.0, preferably equal to or lower than 15.0, more preferably equal to or lower than 13.0, even more preferably equal to or lower than 10.0.

The first high molecular weight polyethylene component of fraction A1 may have a viscosity average molecular weight $M_v$ greater than 400 kg/mol, preferably greater than 450 kg/mol, more preferably greater than 490 kg/mol, calculated from its intrinsic viscosity according to ASTM D 4020 - 05. The first high molecular weight polyethylene component of fraction A1 may have a viscosity average molecular weight $M_v$ less than 3500 kg/mol, preferably less than 3300 kg/mol, more preferably less than 3100 kg/mol, even more preferably less than 2900 kg/mol.

An intrinsic viscosity (IV) of the first high molecular weight polyethylene component of fraction A1 determined according to the ISO 1628-3 is equal to or higher than 4.0 dl/g, preferably equal to or higher than 4.5 dl/g, more preferably equal to or higher than 5.0 dl/g. An intrinsic viscosity (IV) of the first high molecular weight polyethylene component of fraction A1 may be equal to or less than 15.0 dl/g, preferably equal to or less than 12.0 dl/g, more preferably equal to or less than 11.0 dl/g, even more preferably equal to or less than 10 dl/g.

The amount of fraction A2 in the base resin according to the embodiment may be 30 to 70 wt%, preferably 35 to 65 wt%, more preferably 40 to 60 wt% and especially preferably from 45 to 60 % by weight.

A density of the mixture of fractions A1 and A2 determined according to ISO 1183 / 1872-2B may be 925 to 975 kg/m$^3$, preferably 930 to 970 kg/m$^3$.

A melt flow rate $MFR_2$ of the mixture of fractions A1 and A2 determined according to ISO 1133 may be 0.1 to 30.0 g/10 min, preferably 0.2 to 28.0 g/10 min.

The mixture of fractions A1 and A2 may have a molecular weight $M_w$ of at least 50000 g/mol, preferably at least 70000 g/mol, more preferably at least 90000 g/mol, determined by GPC according to ISO 16014-1, 2, 4 and ASTM D 6474-12.

The mixture of fractions A1 and A2 may have a molecular weight $M_w$ of at most 350000 g/mol, preferably at least 300000 g/mol, more preferably at most 250000 g/mol, determined by GPC according to ISO 16014-1, 2, 4 and ASTM D 6474-12.

Fraction A2 may have a calculated molecular weight Mw of at least 10000g/mol, preferably 15000 g/mol, more preferably 20000 g/mol.

Fraction A2 has a calculated molecular weight Mw of at most 70000g/mol, preferably at most 60000 g/mol, more preferably 50000 g/mol.

The amount of fraction A3 in the base resin according to the embodiment may be 25 to 60 wt%, preferably 30 to 50 wt%, more preferably 32 to 45 wt%.

A density of base resin including components of fractions A1, A2 and A3 determined according to ISO 1183 / 1872-2B may be equal to or less than 965 kg/m$^3$, preferably equal to or less than 960 kg/m$^3$, more preferably equal to or less than 955 kg/m$^3$. The density of base resin is equal to or more than 935 kg/m$^3$, preferably equal to or more than 940 kg/m$^3$, more preferably equal to or more than 945 kg/m$^3$, even more preferably equal to or more than 948 kg/m$^3$ The density range of the base resin may be 935 to 965 kg/m$^3$, preferably 940 to 960 kg/m$^3$, more preferably 945 to 955 kg/m$^3$, even more preferably 948 to 955 kg/m$^3$.

A melt flow rate $MFR_5$ of base resin or composition determined according to ISO 1133 may be equal to or less than 0.40 g/10 min, preferably equal to or less than 0.35 g/10 min, more preferably equal to or less than 0.3 g/10 min. The $MFR_5$ of base resin may be equal or higher than 0.01 g/10 min, preferably equal or higher than 0.02 g/10 min, more preferably equal to or higher than 0.04 g/10 min, even more preferably equal to or higher than 0.08 g/10min. The $MFR_5$ range of the polymer composition or the base resin may be 0.01 to 0.40 g/10 min, preferably 0.02 to 0.35 g/10 min, more preferably 0.04 to 0.30 g/10 min, even more preferably 0.08 to 0.30 g/10 min. MFR is an indication of flowability, and hence the processability of the polymer. The higher the melt flow rate, the lower the viscosity of the polymer composition or the base resin.

The base resin or composition may have a melt flow rate $MFR_{21}$ of equal to or less than 12.0 g/10 min, preferably equal to or less than 10.0 g/10 min, more preferably equal to or less than 9.0 g/10 min determined according to ISO 1133. The $MFR_{21}$ of the base resin may be equal to or higher than 2.0 g/10 min, preferably equal to or higher than 2.50 g/10 min, more preferably equal to or higher than 3.0 g/10 min. The $MFR_{21}$ range of the base resin may be 2.0 to 12.0 g/10 min, preferably 2.5 to 10.0 g/10 min, more preferably 3.0 to 9.0 g/10 min.

The polyethylene composition or the base resin may have a flow rate ratio $FRR_{21/5}$, which is the ratio of $MFR_{21}$ and $MFR_5$ of equal to or less than 60, preferably equal to or less than 53, more preferably equal to or less than 48 or even more preferably equal to or less than 43. The flow rate ratio $FRR_{21/5}$ may be equal to or more than 15, preferably equal to or more than 20, more preferably equal to or more than 23, even more preferably equal to or more than 28.

The mixture of fractions A1, A2 and A3 may have a molecular weight $M_w$ of at least 150000 g/mol, preferably at least 175000 g/mol, more preferably at least 200000 g/mol, determined by GPC according to ISO 16014-1, 2, 4 and ASTM D 6474-12.

The mixture of fractions A1, A2 and A3 may have a molecular weight $M_w$ of at most 450000 g/mol, preferably at least 400000 g/mol, more preferably at most 350000 g/mol, determined by GPC according to ISO 16014-1, 2, 4 and ASTM D 6474-12.

Fraction A3 has a calculated molecular weight Mw of at least 250000g/mol, preferably at least 280000 g/mol, more preferably at least 310000 g/mol.

Fraction A3 may have a calculated molecular weight Mw of at most 1000000g/mol, preferably at most 900000 g/mol, more preferably 800000 g/mol.

A density of the composition comprising the base resin and carbon black may be equal to or less than 975 $kg/m^3$, preferably equal to or less than 970 $kg/m^3$, more preferably equal to or less than 968 $kg/m^3$ determined according to ISO 1183 / 1872-2B. The density of composition is equal to or more than 945 $kg/m^3$, preferably equal to or more than 950 $kg/m^3$, more preferably equal to or more than 955 $kg/m^3$.

A good processability of the polyethylene composition is desirable especially for pipe applications. High molecular weight is needed for meeting the requirements of good pressure resistance at elevated temperatures and low creep; however, processing of such high molecular weight resins is more difficult. Improved processability is reached by multimodal design of the base resin. Therefore at least one lower molecular weight component as fraction A2 is needed for easier processability of the composition, while the first high molecular weight component as fraction A1 and the second high molecular weight component as fraction A3 contribute to the mechanical strength of the composition.

The term molecular weight denotes herein the weight average molecular weight $M_{w.}$ The base resin or the polyethylene composition may have a molecular weight $M_w$ of at least 150000 g/mol, preferably at least 180000 g/mol, more preferably at least 200000 g/mol determined by GPC according to ISO 16014-1, 2, 4 and ASTM D 6474-12. The base resin or the polyethylene composition may have a molecular weight $M_w$ of less than 600000 g/mol, preferably less than 500000 g/mol, more preferably less than 400000 g/mol, even preferably less than 350000 g/mol.

The number average molecular weight $M_n$ of the polyethylene composition or base resin may be higher than 5000 g/mol, preferably higher than 6000 g/mol, more preferably higher than 7000 g/mol determined by GPC according to ISO 16014-1, 2, 4 and ASTM D 6474-12. The number average molecular weight $M_n$ of the polyethylene composition or base resin may be less than 20000 g/mol, preferably less than 15000 g/mol, more preferably less than 13000 g/mol.

The polyethylene composition or base resin may have a Z average molecular weight $M_z$ higher than 700000 g/mol, preferably higher than 900000 g/mol, more preferably higher than 1100000 g/mol determined by GPC according to ISO 16014-1, 2, 4 and ASTM D 6474-12. The $M_z$ value of the polyethylene composition or base resin may be less than 3000000 g/mol, preferably less than 2400000 g/mol, more preferably less than 2200000 g/mol. $M_z$ indicates the presence of the very high molecular weight fraction.

The $M_z/M_w$ ratio of the polyethylene composition or base resin may be in the range of 4.5 to 7.0, preferably 5.0 to 6.5, more preferably 5.3 to 6.2, even more preferably 5.5 to 5.9.

The molecular weight distribution MWD can be calculated as the ratio of the weight average molecular weight to the number average molecular weight $M_w/M_n$. The composition or the base resin may have $M_w/M_n$ of equal to or less than 45, preferably equal to or less than 40, more preferably equal to or less than 35. The composition or the base resin may have $M_w/M_n$ of equal to or greater than 10, preferably equal to or greater than 15, more preferably equal to or greater than 20.

The composition or the base resin may have a polydispersity index PI of equal to or less than 7.0 $Pa^{-1}$, preferably equal to or less than 6.0 $Pa^{-1}$, more preferably equal to or less than 5.5 $Pa^{-1}$, even more preferably equal to or less than 5.1 $Pa^{-1}$.The composition or the base resin may have PI of equal to or greater than 1.0 $Pa^{-1}$, preferably equal to or greater than 2.0 $Pa^{-1}$, more preferably equal to or greater than 2.5 $Pa^{-1}$, even more preferably equal to or greater than 3.4 $Pa^{-1}$.

The polyethylene composition or the base resin may have a viscosity at shear stress of 747 Pa (eta747) of equal to or more than 900 kPas. The viscosity at shear stress of 747 Pa (eta747) of equal to or more than 1250 kPas is especially good. This high enough viscosity may be achieved when the composition comprises the very high molecular weight component; however, in order to ensure sufficient processability the amount of the low molecular weight component must then be kept at a sufficient level. It is therefore especially preferred that the base resin comprises from 45 to 60 wt% by weight of the low molecular weight fraction A2. The polyethylene composition or the base resin may have a viscosity at shear stress of 747 Pa (eta747) of equal to or less than 3000 kPas, preferably equal to or less than 2500 kPas, more preferably equal to or less than 2200 kPas. The higher eta747 is, the lower is the sagging of the polyethylene composition. The high eta747 indicates the presence of high molecular weight polymer chains and also high $M_w$. The viscosity of the polymer at this shear stress is determined at a temperature of 190 °C and has been found to be inversely proportional to the gravity flow of the polymer, i.e. the greater the viscosity is, the lower is the gravity flow.

The polyethylene composition or the base resin may have a complex viscosity at 0.05 rad/s $Eta_{0,05rad/s}$ of 190 to 400 kPa s, preferably of 200 to 390 kPa s, more preferably of 210 to 380 kPa·s.

Also the polyethylene composition or the base resin may have a complex viscosity at 300 rad/s $Eta_{300rad/s}$ of 900 to 1600 Pa·s, preferably of 950 to 1550 Pa·s, more preferably of 1000 to 1500 Pa.s.

The polyethylene composition or the base resin may have a ratio of $Eta_{0,05rad/s}$ to $Eta_{300rad/s}$ of 100 to 340, preferably of 120 to 320, more preferably 140 to 300, even more preferably of 160 to 280.

Also a frequency sweep measurement ($\omega_c$) was made for the polyethylene composition. The data may be in the range of 0.07 to 0.65 rad/s, preferably in the range of 0.09 to 0.6 rad/s, more preferably 0.1 to 0.55 rad/s.

A Taber abrasion of the polyethylene composition or the base resin may be less than 13.5 mg/1000 cycles, preferably less than 12.5 mg/1000 cycles, more preferably less than 12.0 mg/1000 cycles determined according to ASTM D4060-07.

In accordance with a short term pressure test (STPT) the failure time for the polyethylene composition or the base resin measured according to ISO 1167-1:2006 at 80 °C and at 6.2 MPa may be at least 80 hours, preferably at least 90 hours, more preferably at least 100 hours. Further in accordance with a short term pressure test (STPT) the failure time for the polyethylene composition or the base resin measured according to ISO 1167-1:2006 at 80 °C and at 5.9 MPa may be at least 290 hours, preferably at least 800 hours, more preferably at least 1000 hours.

A rapid crack propagation (RCP) resistance of a pipe may be determined according to a method called S4 test (ISO 13477:2008). A critical temperature ($T_{crit}$) i.e. ductile brittle transition temperature is the lowest temperature at which the pipe passes the test. The critical temperature of the polyethylene composition or the base resin is lower than -12 °C, preferably lower than -14 °C, more preferably lower than -16 °C.

The Charpy notched impact strength according to ISO 179/1eA:2010 measured at 0 °C may be at least 19 $kJ/m^2$, preferably at least 20 $kJ/m^2$, more preferably at least 21 $kJ/m^2$. The Charpy notched impact strength according to ISO 179/1eA:2000 measured at -20 °C may be at least 11 $kJ/m^2$, preferably at least 12 $kJ/m^2$, more preferably at least 13 $kJ/m^2$.

Catalyst (I)

The solid catalyst component used in (co)polymerisation of ethylene in one inventive example and one comparative example is a solid Ziegler-Natta catalyst component for ethylene polymerisation, which solid Ziegler-Natta catalyst component comprises magnesium, titanium, halogen and an internal organic compound. The internal donor is selected from bi-(oxygen containing ring) compounds of formula (I)

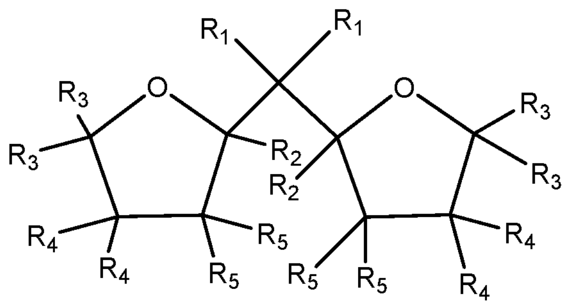

(I)

where $R_1$ to $R_5$ are the same or different and can be hydrogen, a linear or branched $C_1$ to $C_8$-alkyl group, or a $C_3$-$C_8$-alkylene group, or two or more of $R_1$ to $R_5$ can form a ring,
the two oxygen-containing rings are individually saturated or partially unsaturated or unsaturated.

Accordingly, the catalyst used in the present invention comprises a solid $MgCl_2$ supported component which is prepared by a method comprising the steps:

a) providing solid carrier particles of $MgCl_2$*mROH adduct

b) pre-treating the solid carrier particles of step a) with a compound of Group 13 metal

c) treating the pre-treated solid carried particles of step b) with a transition metal compound of Group 4 to 6

d) recovering the solid catalyst component

wherein the solid carrier particles are contacted with an internal organic compound of formula (I) or isomers or mixtures therefrom before treating the solid carrier particles in step c)

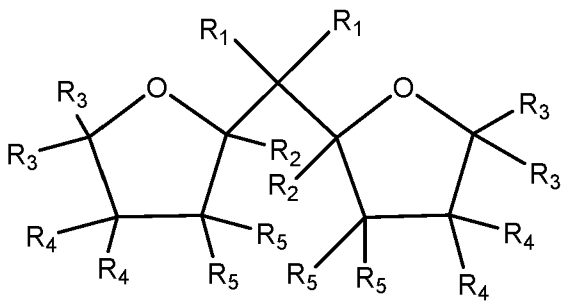

(I)

and
wherein in the formula (I)

$R_1$ to $R_5$ are the same or different and can be hydrogen, a linear or branched $C_1$ to $C_8$-alkyl group, or a $C_3$-$C_8$-alkylene group, or two or more of $R_1$ to $R_5$ can form a ring,

the two oxygen-containing rings are individually saturated or partially unsaturated or unsaturated, and

R in the adduct $MgCl_2$*mROH is a linear or branched alkyl group with 1 to 12 C atoms, and m is 0 to 6.

Accordingly, the internal organic compound of formula (I) is contacted with the solid carrier particles before treatment of solid carrier particles with the transition metal compound of Group 4 to 6. Thus, said internal organic compound can be contacted with the solid carrier particles before step b), i.e. before pre-treating the solid carrier particles with Group 13 metal compound, or simultaneously with said pre-treatment step, or after step b), but before treating the solid carrier particles with the transition metal compound of Group 4 to 6.

Further, one object is to use the catalyst in accordance to what is disclosed below in the process for producing polyethylene in a multistage process.

The catalyst will be described in the following in greater detail, referring to the particular preferred embodiments.

As used herein, the term Ziegler Natta (ZN) catalyst component is intended to cover a catalyst component comprising a transition metal compound of Group 4 to 6, a compound of a metal of Group 13 of the Periodic Table (IUPAC, Nomenclature of Inorganic Chemistry, 1989) and an internal organic compound supported on $MgCl_2$ based carrier.

Magnesium dihalide is used as a starting material for producing a carrier. The solid carrier is a carrier where alcohol is coordinated with Mg dihalide, preferably $MgCl_2$. The $MgCl_2$ is mixed with an alcohol (ROH) and the solid carrier $MgCl_2$*mROH is formed according to the well-known methods. As examples, spray drying or spray crystallisation methods can be used to prepare the magnesium halide. Spherical and granular $MgCl_2$*mROH carrier materials of different sizes (5-100 μm) are suitable to be used in the present invention. The alcohol in producing $MgCl_2$*mROH carrier material is an alcohol ROH, where R is a linear or branched alkyl group containing 1 to 12 carbon atoms, preferably 1 to 8 carbon atoms, like 1 to 4 carbon atoms. Ethanol is typically used. In $MgCl_2$*mROH, m is from 0 to 6, more preferably from 1 to 4, especially from 2.7 to 3.3.

$MgCl_2$*mROH is available from commercial sources or can be prepared by methods described in prior art. Preparation methods of $MgCl_2$*mROH carrier is described in several patents e.g. in EP-A-376936, EP-A-424049, EP-A-655073 and EP-A-614467.

Group 13 metal compound, used in step b) is preferably an aluminium compound. Particularly preferably the aluminium compound is an aluminium compound of the formula $Al(alkyl)_xX_{3-x}$ (II), wherein each alkyl is independently an alkyl group of 1 to 12 carbon atoms, preferably 1 to 8 carbon atoms, more preferably 1 to 6 carbon atoms, X is halogen, preferably chlorine and $1 < x \leq 3$. The alkyl group can be linear, branched or cyclic, or a mixture of such groups.

Preferred aluminium compounds are dialkyl aluminium chlorides or trialkyl aluminium compounds, for example dimethyl aluminium chloride, diethyl aluminium chloride, di-isobutyl aluminium chloride, and triethylaluminium or mixtures therefrom. Most preferably the aluminium compound is a trialkyl aluminium compound, especially triethylaluminium compound.

The transition metal compound of Group 4 to 6 is preferably a Group 4 transition metal compound or a vanadium compound and is more preferably a titanium compound. Particularly preferably the titanium compound is a halogen-containing titanium compound of the formula $X_yTi(OR^8)_{4-y}$, wherein $R^8$ is a $C_{1-20}$ alkyl, preferably a $C_{2-10}$ and more preferably a $C_{2-8}$ alkyl group, X is halogen, preferably chlorine and y is 1, 2, 3 or 4, preferably 3 or 4 and more preferably 4.

Suitable titanium compounds include trialkoxy titanium monochlorides, dialkoxy titanium dichloride, alkoxy titanium trichloride and titanium tetrachloride. Preferably titanium tetrachloride is used.

The internal organic compound is selected from bi-cyclic ether compounds of formula (I):

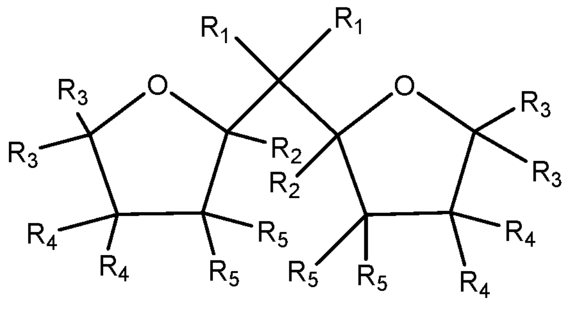

(I)

wherein in the formula (I)

$R_1$ to $R_5$ are the same or different and can be hydrogen, a linear or branched $C_1$ to $C_8$-alkyl group, or a $C_3$-$C_8$-alkylene group, or two or more of $R_1$ to $R_5$ can form a ring, and

whereby the two oxygen-containing rings are individually saturated or partially unsaturated or unsaturated.

Examples of preferred linear or branched $C_1$ to $C_8$-alkyl groups are methyl, ethyl, n-propyl, i-propyl, n-butyl, sec-butyl, tert-butyl, pentyl and hexyl groups.

Examples for preferred $C_3$-$C_8$-alkylene groups are pentylene and butylene groups.

The two $R_1$ are preferably the same and are a linear $C_1$ to $C_4$-alkyl groups, more preferably methyl or ethyl; or the two $R_1$ form a ring with the carbon atom they are attached to a ring with 3 to 7 carbon atoms , preferably cyclopentyl or cyclohexyl ring.

Most preferably both $R_1$ are methyl.

$R_2$ to $R_5$ are the same or different and are preferably H or a $C_1$ to $C_2$-alkyl groups, or two or more of $R_2$ to $R_5$ residues can form a ring. If one or more rings are formed by the residues $R_2$ to $R_5$, these are more preferably formed by $R_3$ and $R_4$ and/or $R_4$ and $R_5$.

Preferably the residues $R_2$ to $R_5$ do not form rings and more preferably at most two of the residues $R_2$ to $R_5$ are a methyl, the others are H. Most preferably $R_2$ to $R_5$ are all hydrogens.

Furthermore both oxygen-containing rings are preferably saturated or partially unsaturated or unsaturated. Each partially unsaturated or unsaturated oxygen-containing ring can have one or two double bonds.

More preferably both oxygen-containing rings are saturated.

In the most preferred embodiment, 2,2-di(2-tetrahydrofuryl)propane (DTHFP) is used with the isomers thereof. DTHFP is typically a 1:1 mol/mol diastereomeric mixture of D,L-(rac)-DTHFP and meso-DTHFP.

It has been found that using an internal organic compound that is enriched in isomers of DTHFP, that the catalyst morphological properties are not influenced. It was found that by using enriched rac-DTHFP, where the ratio of D,L-(rac)-DTHFP/meso-DTHFP is at least 2/1 mol/mol, it was possible to produce the catalyst morphology as good as with the equimolar (rac) and (meso) mixture.

Enrichment was surprisingly successful via complexation with $MgCl_2$.

When producing the supported catalyst component used in the present invention it is especially preferred that the internal organic compound, as defined above, is added to the catalyst mixture before, during or after the pre-treating of the $MgCl_2$-mROH with the Group 13 metal compound, but before treating it with the compound of a transition metal of Group 4 to 6.

Thus, according to one suitable method the solid catalyst component is prepared by a process comprising the steps of:

i) providing solid $MgCl_2$*mROH carrier, wherein m is 1 to 4 and R is a linear or branched alkyl group containing 1 to 8 C atoms

ii) pre-treating the solid carrier particles of step i) with an Al compound

iii) adding the internal organic compound of formula (I) into the pre-treated solid carrier of step ii) or

iii') simultaneously with step ii) adding the internal organic compound of formula (I) into the solid carrier

iv) treating the pre-treated solid carried particles of step iii) or iii') with $TiCl_4$ and

v) recovering the solid catalyst component

Thus, according to another suitable method the solid catalyst component is prepared by a process comprising the steps of:

i) providing solid $MgCl_2$*mROH carrier, wherein m is 1 to 4 and R is a linear or branched alkyl group containing 1 to 8 C atoms

ii-1) adding the internal organic compound of formula (I) into the solid carrier of step i)

iii-1) pre-treating the solid carrier particles of step ii-1) with an Al compound

iv-1) treating the pre-treated solid carried particles of step iii-1) with $TiCl_4$ and

v-1) recovering the solid catalyst component.

According to either one of the methods above the Al compound can be added to the solid carrier before or after adding the internal organic compound or simultaneously with the internal organic compound to the carrier.

Most preferably in the above-mentioned embodiments, m = 2.7 to 3.3, ROH is ethanol, aluminium compound is an aluminium trialkyl compound, such as triethyl aluminium, and as internal organic compound is 2,2-di(2-tetrahydrofuryl)propane, or 2,2-di-(2-furan)-propane, especially 2,2-di(2-tetrahydrofuryl)propane or mixtures thereof.

According to the catalyst preparation method of the present invention the pre-treatment with the Group 13 metal compound, preferably an aluminium compound, can be done by adding a solution of said aluminium compound in inert organic solvent, preferably in inert aliphatic hydrocarbon solvent, for example in heptane. The method allows use of a concentrated aluminium compound solution. In the case where triethylaluminium (TEA) is used, a 15 to 100 wt-% solution of TEA in an inert hydrocarbon, preferably a 25 to 100 wt-% solution of TEA in inert aliphatic hydrocarbon solvent, like in heptane can be used, or neat TEA. It was found that by using these more concentrated solutions, the morphology remains advantageous and a reduced amount of waste is produced.

The final solid catalyst component typically has Mg/Ti mol/mol ratio of from 1 to 10, preferably from 2 to 8, especially from 3 to 7, Al/Ti mol/mol ratio of from 0.01 to 1, preferably from 0.1 to 0.5 and Cl/Ti mol/mol ratio of from 5 to 20, preferably from 10 to 17.

Preferably the particles of the solid catalyst component of the invention do not contain substantial amount of fines or agglomerates.

The supported catalyst component as described above allows the production of polymers with increased molecular weight. The increase in molecular weight is not made at the expense of the productivity of the catalyst. The productivity remains at an acceptably high level or is even increased compared to use of a catalyst component of similar type but using a different internal organic compound and/or prepared by adding the internal organic compound during or after the treatment step with $TiCl_4$, or using said organic compound as external additive. Thus, the performance of the catalyst prepared by the method of the present invention makes it possible to broaden the preparation window of the polyethylene such that polymerisation with both higher and lower amounts of hydrogen is possible while retaining good productivity.

The catalyst used in the process of the invention comprises, in addition to the solid catalyst component as defined above, a cocatalyst, which is also known as an activator. Cocatalysts are organometallic compounds of Group 13 metal, typically aluminium compounds. These compounds include alkyl aluminium halides, preferably alkyl aluminium chlorides, such as ethylaluminium dichloride, diethylaluminium chloride, ethylaluminium sesquichloride, dimethylaluminium chloride and the like. They also include trialkylaluminium compounds, such as trimethylaluminium, triethylaluminium, tri-isobutylaluminium, trihexylaluminium and tri-n-octylaluminium. Also other aluminium alkyl compounds, such as isoprenylaluminium, may be used. Especially preferred cocatalysts are trialkylaluminiums, of which triethylaluminium, trimethylaluminium and tri-isobutylaluminium are particularly used.

The catalyst may also comprise an external additive, like external donor. External additives that can be used include ether compounds, typically tetrahydrofuran, siloxane or silane type of external donors and/or alkyl halides as is known from prior art. The final solid catalyst component, i.e. the ZN solid catalyst component, obtained according to any one of the above described methods, is combined with an activator.

Suitable activators are optionally halogenated aluminium alkyl cocatalysts of formula (V) $(C_1\text{-}C_4\text{-alkyl})_p\text{-Al-}X_{3-p}$, wherein X is chlorine, bromine, iodine or fluorine and p is 1, 2 or 3.

The $C_1$-$C_4$-alkyl groups can be linear or branched or cyclic, or a mixture of such groups.

X is preferably chlorine or bromine, most preferably X is chlorine.

Suitable activators are for example trimethyl aluminium (TMA), triethyl aluminium (TEA) dimethyl aluminium chloride (DMAC), diethyl aluminium chloride (DEAC), diisobutyl aluminium chloride (DIBAC), ethyl aluminium dichloride (EADC), methyl aluminium dichloride (MADC). A preferred activator used in the process is triethylaluminium.

The amount in which the activator is used depends on the specific catalyst and the activator. Typically triethylaluminium is used in such amount that the molar ratio of aluminium to the transition metal, like Al/Ti, is from 1 to 1000, preferably from 3 to 100 and in particular from about 5 to about 30 mol/mol.

Catalyst (II)

Another catalyst component used in (co)polymerisation of ethylene in several inventive examples is Lynx 200, which is commercially available Ziegler-Natta catalyst manufactured and supplied by BASF.

Polymerisation

The multimodal polyethylene composition may be produced in a multistage polymerisation process in the presence of Ziegler-Natta catalyst hereinbefore defined. Ethylene and optionally alpha-olefin comonomers with 3 - 20 carbon atoms, preferably with 3-12 carbon atoms, have been polymerised in a process comprising at least three consecutive polymerisation stages. Each polymerisation stage may be conducted in a separate reactor. The polymerisation may be followed by a compounding step.

The base resin of the polyethylene composition may be polymerised in at least one slurry phase reactor, preferably two slurry phase reactors, and at least one gas phase reactor, preferably one gas phase reactor. The first high molecular weight polyethylene component of fraction A1 and the low molecular weight polyethylene component of fraction A2 may be polymerised in a sequential slurry phase reactors, which are preferably loop reactors, and the second high molecular weight polyethylene component of fraction A3 may be polymerised in a gas phase reactor. Typically the order is first two loop reactors and then the gas phase reactor, but as well the order when polymerising could be different. Typically the first high molecular weight component of fraction A1 is polymerised in the first reaction stage, the low molecular weight component of fraction A2 in the second reaction stage in the presence of the first high molecular weight component and the second high molecular weight component of fraction A3 in the third reaction stage in the presence of fraction A1 and A2. The components from these reactors in series are mainly mixed, since fraction A1 is included when polymerising fraction A2 in the second stage and fractions A1 and A2 are included when polymerising fraction A3. The same polymerisation catalyst may be used in three reactors. Also it is possible to produce in the first, second or third reactor in the presence of two or three different polymerisation catalysts the polymer components of fraction A1, fraction A2 and fraction A3.

Optionally the reaction stage in the slurry phase reactor is preceded by a prepolymerisation stage in a slurry phase reactor. The purpose of the prepolymerisation is to polymerise a small amount of polymer onto the catalyst at a low temperature and/or a low monomer concentration. By prepolymerisation it is possible to improve the performance of the catalyst in slurry and/or modify the properties of the final polymer.

Thus, the prepolymerisation step may be conducted in a loop reactor. The prepolymerisation is then preferably conducted in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons.

The temperature in the prepolymerisation step is typically from 0 to 90 °C, preferably from 20 to 80 °C and more preferably from 55 to 75 °C.

The pressure is not critical and is typically from 1 to 150 bar, preferably from 10 to 100 bar.

The amount of monomer is typically such that from about 0.1 to 1000 grams of monomer per one gram of solid catalyst component is polymerised in the prepolymerisation step. As the person skilled in the art knows, the catalyst particles recovered from a continuous prepolymerisation reactor do not all contain the same amount of prepolymer. Instead, each particle has its own characteristic amount which depends on the residence time of that particle in the prepolymerisation reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen, if desired, as it is known in the art. Further, antistatic additive may be used to prevent the particles from adhering to each other or the walls of the reactor, as disclosed in WO-A-96/19503 and WO-A-96/32420.

The catalyst components are preferably all (separately or together) introduced to the prepolymerisation step when such prepolymerisation step is present. However, where the solid catalyst component and the cocatalyst can be

fed separately it is possible that only a part of the cocatalyst is introduced into the prepolymerisation stage and the remaining part into subsequent polymerisation stages. Also in such cases it is necessary to introduce so much cocatalyst into the prepolymerisation stage that a sufficient polymerisation reaction is obtained therein.

Typically, the amounts of hydrogen (if needed) and comonomer (if needed) are adjusted so that the presence of the prepolymer has no effect on the properties of the final multimodal polymer. Especially, it is preferred that the melt flow rate of the prepolymer is greater than the melt flow rate of the final polymer. Further, typically the amount of the prepolymer is not more than about 7 % by weight of the multimodal polymer comprising the prepolymer.

In first slurry phase reactor when polymerising the first high molecular weight polyethylene component of fraction A1 as an inert diluent may be used hydrocarbon, such as ethane, propane, n-butane etc. Ethylene and optionally hydrogen and/or comonomer are introduced into the loop reactor to produce polyethylene in the presence of Ziegler-Natta catalyst. In the embodiment no hydrogen was used to get the first high molecular weight polyethylene component. According to the embodiment comonomer may be either 1-butene or 1-hexene. In case 1-butene is the comonomer the ratio of 1-butene to ethylene may be from 1 to 300 mol/kmol, preferably from 5 to 290 mol/kmol, more preferably from 10 to 280 mol/kmol. If 1-hexene is used as a comonomer the ratio of 1-hexene to ethylene may be from 1 to 30 mol/kmol, preferably from 1 to 25 mol/kmol, more preferably from 1.5 to 15 mol/kmol. In some embodiments comonomer may not be needed at all. Thus the first high molecular weight polyethylene can be either homo or copolymer.

The ethylene content in the fluid phase of the slurry in the first slurry phase reactor may be from 0.1 to 15 % by mole, preferably from 0.2 to 10 % by mole, even more preferably from 0,2 to 5 % by mole. The benefit of having a high ethylene concentration is that the productivity of the catalyst is increased but the drawback is that more ethylene then needs to be recycled than if the concentration was lower.

The temperature in the first slurry phase reactor may be from 50 to 115 °C, preferably from 60 to 110 °C, more preferably from 65 to 100 °C. The pressure may be from 10 to 150 bar, preferably from 30 to 110 bar, more preferably from 40 to 100 bar.

When polymerising the low molecular weight polyethylene component of fraction A2 in second slurry phase reactor hydrocarbon, such as ethane, propane, n-butane etc. may be used as an inert diluent. Ethylene and optionally hydrogen and/or comonomer are introduced into the loop reactor to produce the low molecular weight polyethylene in the presence of Ziegler-Natta catalyst. To adjust the $MFR_2$ of the polyethylene hydrogen may be fed into the reactor. As in the first slurry phase reactor comonomer may also be in the second slurry phase reactor either 1-butene or 1-hexene. In case 1-butene is the comonomer the ratio of 1-butene to ethylene may be from 1 to 70 mol/kmol, preferably from 2 to 65 mol/kmol, more preferably from 2 to 60 mol/kmol. If 1-hexene is used as a comonomer the ratio of 1-hexene to ethylene may be from 0.1 to 10 mol/kmol, preferably from 0.5 to 7 mol/kmol, more preferably from 1 to 4 mol/kmol. In some embodiments comonomer may not be needed at all. The low molecular weight polyethylene can be either homo or copolymer.

The ethylene content in the fluid phase of the slurry in the second slurry phase reactor may be from 1 to 15 % by mole, preferably from 1.5 to 10 % by mole, even more preferably from 2 to 8 % by mole.

The molar ratio of hydrogen to ethylene in the second slurry phase reactor may be from 100 to 1000 mol/kmol, preferably from 300 to 520 mol/kmol, more preferably from 320 to 500 mol/kmol. The temperature in the second slurry phase reactor may be from 50 to 115 °C, preferably from 60 to 110 °C, more preferably from 70 to 105 °C. The pressure may be from 10 to 150 bar, preferably from 30 to 110 bar, more preferably from 40 to 100 bar.

The slurry phase polymerisation in the first and second slurry phase reactors may be conducted in any known reactor suitable for slurry phase polymerisation, e.g. in a continuous stirred tank reactor or a loop reactor. Loop reactors suitable in the slurry phase polymerisation are generally known in the art e.g. in US-A-4582816, US-A-3405109, US-A-3324093, EP-A-479186 and US-A-5391654.

The slurry can be withdrawn from the slurry phase reactor either continuously or intermittently. A preferred way of intermittent withdrawal is the use of settling legs where the slurry is allowed to concentrate before withdrawing a batch of the concentrated slurry from the reactor. The use of settling legs is disclosed, amongst others, in US-A-3374211, US-A-3242150 and EP-A-1310295. Continuous withdrawal is disclosed e.g. in EP-A-891990, EP-A-1415999, EP-A-1591460 and WO-A-2007/025640. Continuous withdrawal may be combined with a suitable concentration method as disclosed in EP-A-1415999 and EP-A-1591460.

Settling legs are used to concentrate the slurry that is withdrawn from the reactor. The withdrawn stream thus contains more polymer per volume than the slurry within the reactor in average. This has the benefit that less liquid needs to be recycled back to the reactor and thereby the costs of the equipment are lower. In commercial scale plants the fluid which is withdrawn with the polymer evaporates in a flash tank and from there it is compressed with a compressor and recycled into a slurry phase reactor.

However, the settling legs withdraw the polymer intermittently. This causes the pressure and other variables in the reactor to fluctuate with the period of withdrawal. Also the withdrawal capacity is limited and depends on the size and number of settling legs. To overcome these disadvantages continuous withdrawal is often preferred.

The continuous withdrawal, on the other hand, has the problem that it typically withdraws the polymer in the

same concentration as it is present within the reactor. To reduce the amount of hydrocarbons to be compressed the continuous outlet is advantageously combined with a suitable concentration device, such as hydrocyclone or sieve, as disclosed in EP-A-1415999 and EP-A-1591460. The polymer-rich stream is then directed to a flash and the polymer stream is returned directly into the reactor.

According to the embodiment from the first slurry phase reactor fraction A1 may be transferred to the second slurry phase reactor and from the second slurry phase reactor mixture of polymer fractions A1 and A2 may be transferred to a gas phase reactor. In a fluidised bed gas phase reactor an olefin is polymerised in the presence of Ziegler-Natta catalyst in an upwards moving gas stream. The fluidised bed may comprise the growing polymer particles including the active catalyst located above a fluidisation grid.

The polymer bed is fluidised with the help of a fluidisation gas comprising the olefin monomer, eventual comonomer(s), eventual chain growth controllers or chain transfer agents, such as hydrogen, and eventual inert gas used in the slurry phase reactor or inert gas can be different. The fluidisation gas is introduced into an inlet chamber at the bottom of the reactor. To make sure that the gas flow is uniformly distributed over the cross-sectional surface area of the inlet chamber the inlet pipe may be equipped with a flow dividing element as known in the art, e.g. US-A-4933149 and EP-A-684871.

From the inlet chamber the gas flow is passed upwards through a fluidisation grid into the fluidised bed. The purpose of the fluidisation grid is to divide the gas flow evenly through the cross-sectional area of the bed. Sometimes the fluidisation grid may be arranged to establish a gas stream to sweep along the reactor walls, as disclosed in WO-A-2005/087361. Other types of fluidisation grids are disclosed, among others, in US-A-4578879, E-A-600414 and EP-A-721798. An overview is given in Geldart and Bayens: The Design of Distributors for Gas-fluidized Beds, Powder Technology, Vol. 42, 1985.

The fluidisation gas passes through the fluidised bed. The superficial velocity of the fluidisation gas must be higher than minimum fluidisation velocity of the particles contained in the fluidised bed, as otherwise no fluidisation would occur. On the other hand, the velocity of the gas should be lower than the onset velocity of pneumatic transport, as otherwise the whole bed would be entrained with the fluidisation gas. The minimum fluidisation velocity and the onset velocity of pneumatic transport can be calculated when the particle characteristics are known by using common engineering practise. An overview is given, among others in Geldart: Gas Fluidization Technology, J.Wiley & Sons, 1986.

When the fluidisation gas is contacted with the bed containing the active catalyst the reactive components of the gas, such as monomers and chain transfer agents, react in the presence of the catalyst to produce the polymer product. At the same time the gas is heated by the reaction heat.

The unreacted fluidisation gas is removed from the top of the reactor, compressed and recycled into the inlet chamber of the reactor. Prior to the entry into the reactor fresh reactants are introduced into the fluidisation gas stream to compensate for the losses caused by the reaction and product withdrawal. It is generally known to analyse the composition of the fluidisation gas and introduce the gas components to keep the composition constant. The actual composition is determined by the desired properties of the product and the catalyst used in the polymerisation.

After that the gas is cooled in a heat exchanger to remove the reaction heat. The gas is cooled to a temperature which is lower than that of the bed to prevent the bed from heating because of the reaction. It is possible to cool the gas to a temperature where a part of it condenses. When the liquid droplets enter the reaction zone they are vaporised. The vaporisation heat then contributes to the removal of the reaction heat. This kind of operation is called condensed mode and variations of it are disclosed, among others, in WO-A-2007/025640, US-A-4543399, EP-A-699213 and WO-A-94/25495. It is also possible to add condensing agents into the recycle gas stream, as disclosed in EP-A-696293. The condensing agents are non-polymerisable components, such as n-pentane, isopentane, n-butane or isobutene, which are at least partially condensed in the cooler.

The catalyst may be introduced into the reactor in various ways, either continuously or intermittently. Among others, WO-A-01/05845 and EP-A-499759 disclose such methods. Where the gas phase reactor is a part of a reactor cascade the catalyst is usually dispersed within the polymer particles from the preceding polymerisation stage. The polymer particles may be introduced into the gas phase reactor as disclosed in EP-A-1415999 and WO-A-00/26258.

The polymeric product may be withdrawn from the gas phase reactor either continuously or intermittently. Combinations of these methods may also be used. Continuous withdrawal is disclosed, among others, in WO-A-00/29452. Intermittent withdrawal is disclosed, among others, in US-A-4621952, EP-A-188125, EP-A-250169 and EP-A-579426.

The top part of the gas phase reactor may include a so called disengagement zone. In such a zone the diameter of the reactor is increased to reduce the gas velocity and allow the particles that are carried from the bed with the fluidisation gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain time-averaged bed level.

Also antistatic agent(s) may be introduced into the gas phase reactor if needed. Suitable antistatic agents and methods to use them are disclosed, among others, in US-A-5026795, US-A-4803251, US-A-4532311, US-A-4855370 and EP-A-560035. They are usually polar compounds and include, among others, water, ketones, aldehydes and alcohols.

The reactor may also include a mechanical agitator to further facilitate mixing within the fluidised bed. An example of suitable agitator design is given in EP-A-707513.

To control the molecular weight of the second high molecular weight polyethylene in gas phase polymerisation stage then hydrogen may be added to the gas phase reactor so that the molar ratio of hydrogen to ethylene may be from 1 to 200 mol/kmol, preferably from 3 to 180 mol/kmol, even more preferably from 5 to 160 mol/kmol. Comonomer, which is in this embodiment 1-hexene, may then be introduced into the gas phase polymerisation stage so that the molar ratio of comonomer to ethylene is from 1 to 100 mol/kmol, and preferably from 2 to 50 mol/kmol, even more preferably from 4 to 30 mol/kmol. In some embodiments comonomer may not be needed at all. The second high molecular weight polyethylene component can be either homo or copolymer.

The ethylene content in the gas phase of the gas phase reactor may be from 1 to 35 % by mole, preferably from 2 to 30 % by mole, even more preferably from 3 to 25 % by mole.

The temperature in the gas phase polymerisation may be from 65 to 105 °C, preferably from 70 to 100 °C, more preferably from 75 to 95 °C. The pressure may be from 10 to 30 bar, preferably from 15 to 25 bar.

Extrusion

When the polymer mixture has been removed from the polymerisation reactor it is subjected to process steps for removing residual hydrocarbons from the polymer. Such processes are well known in the art and can include pressure reduction steps, purging steps, stripping steps, extraction steps and so on. Also combinations of different steps are possible.

According to one preferred process a part of the hydrocarbons is removed from the polymer powder by reducing the pressure. The powder is then contacted with steam at a temperature of from 90 to 110 °C for a period of from 10 minutes to 3 hours. Thereafter the powder is purged with inert gas, such as nitrogen, over a period of from 1 to 60 minutes at a temperature of from 20 to 80 °C.

According to another preferred process the polymer powder is subjected to a pressure reduction as described above. Thereafter it is purged with an inert gas, such as nitrogen, over a period of from 20 minutes to 5 hours at a temperature of from 50 to 90 °C. The inert gas may contain from 0.0001 to 5 %, preferably from 0.001 to 1 %, by weight of components for deactivating the catalyst contained in the polymer, such as steam.

The purging steps are preferably conducted continuously in a settled moving bed. The polymer moves downwards as a plug flow and the purge gas, which is introduced to the bottom of the bed, flows upwards.

Suitable processes for removing hydrocarbons from polymer are disclosed in WO-A-02/088194, EP-A-683176, EP-A-372239, EP-A-47077 and GB-A-1272778.

After the removal of residual hydrocarbons the polymer is preferably mixed with additives as it is well known in the art. Such additives include antioxidants, process stabilisers, neutralisers, lubricating agents, nucleating agents, pigments and so on. Carbon black may be mentioned as a typical pigment. The polyethylene composition may comprise all these additives. The amount of base resin in the polyethylene composition may vary from 85 to 100 wt%, preferably from 90 to 100 wt%, more preferably from 95 to 100 wt%.

The polymer particles are mixed with additives and extruded to pellets as it is known in the art. Preferably a counter-rotating twin screw extruder is used for the extrusion step. Such extruders are manufactured, for instance, by Kobe and Japan Steel Works. A suitable example of such extruders is disclosed in EP-A-1600276. Typically the specific energy input (SEI) is during the extrusion within the range of from 180 to 250 kWh/ton. The melt temperature is typically from 220 to 290 °C.

**Methods**

Melt flow rate

The melt flow rate (MFR) is determined according to ISO 1133 and is indicated in g/10 min. The MFR is an indication of the melt viscosity of the polymer. The MFR is determined at 190 °C for PE. The load under which the melt flow rate is determined is usually indicated as a subscript, for instance $MFR_2$ is measured under 2.16 kg load (condition D), $MFR_5$ is measured under 5 kg load (condition T) or $MFR_{21}$ is measured under 21.6 kg load (condition G).

The quantity FRR (flow rate ratio) is an indication of molecular weight distribution and denotes the ratio of flow rates at different loads. Thus, $FRR_{21/5}$ denotes the value of $MFR_{21}/MFR_5$.

Density

Density of the polymer was measured according to ISO 1183 / 1872-2B.

For the purpose of this invention the density of the blend can be calculated from the densities of the components according to:

$$\rho_b = \sum_i w_i \cdot \rho_i$$

where

$\rho_b$ is the density of the blend,
$w_i$ is the weight fraction of component "i" in the blend and
$\rho_i$ is the density of the component "i".

Molecular weight averages, molecular weight distribution ( $M_n$, $M_w$, $M_z$, MWD)

Molecular weight averages ($M_z$, $M_w$ and $M_n$), Molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i \, x \, M_i)}{\sum_{i=1}^{N} A_i} \quad (2)$$

$$M_z = \frac{\sum_{i=1}^{N} (A_i \, x \, M_i^2)}{\sum_{i=1}^{N} (A_i x M_i)} \quad (3)$$

For a constant elution volume interval $\Delta V_i$, where $A_i$, and $M_i$ are the chromatographic peak slice area and polyolefin molecular weight ($M_W$), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 μL of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0.5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3} \text{ mL/g}, \alpha_{PS} = 0.655$$

$$K_{PE} = 39 \times 10^{-3} \text{ mL/g}, \alpha_{PE} = 0.725$$

$$K_{PP} = 19 \times 10^{-3} \text{ mL/g}, \alpha_{PP} = 0.725$$

A third order polynomial fit was used to fit the calibration data.

All samples were prepared in the concentration range of 0.5 -1 mg/ml and dissolved at 160 °C for 2.5 hours for PP or 3 hours for PE under continuous gentle shaking.

Nominal viscosity molecular weight

Nominal viscosity molecular weight is calculated from the intrinsic viscosity [η] according to ASTM D 4020 - 05

$$M_v = 5.37 \times 10^4 \times [\eta]^{1.37}$$

Rapid crack propagation

The rapid crack propagation (RCP) resistance of a pipe may be determined according to a method called the S4 test (Small Scale Steady State), which has been developed at Imperial College, London, and which is described in ISO 13477:2008. The outer diameter of the pipe is 110 mm and its wall thickness 10 mm. The length of the pipe is 838 mm. While the exterior of the pipe is at ambient pressure (atmospheric pressure), the pipe is pressurised internally, and the internal pressure in the pipe is kept constant at a pressure of 4.0 bar positive pressure. The length of the gauge is 590 mm.

The pipe is conditioned to a predetermined temperature. Decompression baffles inside the pipe prevent decompression during the test duration. A striker blade with defined shape impacts the pipe close to its one end in the so-called anvil zone in order to start a rapidly running axial crack. The speed of the striker blade is 15 +/-1 m/s. In the anvil zone a containment cage restricts deformation of the pipe.

The axial crack length is measured and the temperature reduced until the measured crack length exceeds 517 mm. This temperature is called the critical temperature ($T_{crit}$). The lower the critical temperature the better, since it results in an extension of the applicability of the pipe.

Short term Pressure test (STPT)

The pressure test on un-notched 32 mm SDR 11 pipes having a length of 450 mm is carried out in water-inside and water-outside environment according to ISO 1167-1:2006. End caps of type A were used. The time to failure is determined in hours. A hoop stress of 6.2 MPa and a temperature of 80 °C were applied.

Charpy notched impact strength

Charpy notched impact strength was determined according to ISO 179/1eA:2010 on V-notched samples of 80*10*4 mm at 0 °C (Charpy notched impact strength (0 °C) and -20 °C (Charpy notched impact strength (-20 °C)). Samples were milled from plaques of 4 mm thickness prepared by compression moulding according to ISO 293:2004 using the conditions defined in chapter 3.3 of ISO 1872-2:2007.

Taber abrasion resistance

The wear index was calculated as weight loss (in mg) per 1000 cycles according to ASTM D4060-14 (CS-17 wheel). Samples were cut from plaques of 2 mm thickness prepared by compression moulding according to ISO 293:2004 using the conditions defined in chapter 3.3 of ISO 1872-2:2007.

Rheology

The characterisation of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at temperature 190 °C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \quad (1)$$

If the applied strain is within the linear viscoelastic regime, the resulting sinusoidal stress response can be given by

$$\sigma(t) = \sigma_0 \sin(\omega t + \delta) \quad (2)$$

where

$\sigma_0$ and $\gamma_0$ are the stress and strain amplitudes, respectively

$\omega$ is the angular frequency

$\delta$ is the phase shift (loss angle between applied strain and stress response)

t is the time

Dynamic test results are typically expressed by means of several different rheological functions, namely the shear storage modulus G', the shear loss modulus, G", the complex shear modulus, G*, the complex shear viscosity, η*, the dynamic shear viscosity, η', the out-of-phase component of the complex shear viscosity η" and the loss tangent, tan δ which can be expressed as follows:

$$G' = \frac{\sigma_0}{\gamma_0}\cos\delta \text{ [Pa]} \quad (3)$$

$$G' = \frac{\sigma_0}{\gamma_0}\sin\delta \text{ [Pa]} \quad (4)$$

$$G^* = G' + iG'' \text{ [Pa]} \quad (5)$$

$$\eta^* = \eta' - i\eta'' \text{ [Pa.s]} \quad (6)$$

$$\eta' = \frac{G''}{\omega} \text{ [Pa.s]} \quad (7)$$

$$\eta'' = \frac{G'}{\omega} \text{ [Pa.s]} \quad (8)$$

The values of storage modulus (G'), loss modulus (G"), complex modulus (G*) and complex viscosity (η*) were obtained as a function of frequency (ω). Thereby, e.g. $\eta^*_{0.05\ rad/s}$ ($eta^*_{0.05\ rad/s}$) is used as abbreviation for the complex viscosity at the frequency of 0.05 rad/s or $\eta^*_{300\ rad/s}$ ($eta^*_{300\ rad/s}$) is used as abbreviation for the complex viscosity at the frequency of 300 rad/s.

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus "*- Interpolate y-values to x-values from parameter*" and the *"logarithmic interpolation type"* were applied.

Rheological polydispersity index PI

The polydispersity index, *PI,* is defined by equation:

$$PI = \frac{10^5}{G'(\omega_{COP})}, \omega_{COP} = \omega \ for \ (G' = G'')$$

where, $\omega_{COP}$ is the cross-over angular frequency, determined as the angular frequency for which the storage modulus, G' equals the loss modulus, G".

Rheological parameter Eta 747:

One method which correlates well with the sagging properties, and is used in connection with the present invention relates to the rheology of the polymer and is based on determination of the viscosity of the polymer at a very low, constant shear stress. A shear stress of 747 Pa has been selected for this method. The viscosity of the polymer at this shear stress is determined at a temperature of 190 °C and has been found to be inversely proportional to the gravity flow of the polymer, i.e. the greater the viscosity the lower the gravity flow.

The determination of the viscosity at 747 Pa shear stress is made by using a rotational rheometer, which can be a constant stress rheometer as for example an Anton Paar MCR Series Rheometer. Rheometers and their function have been described in "Encyclopedia of Polymer Science and Engineering", 2nd Ed., Vol. 14, pp. 492-509. The measurements are performed under a constant shear stress between two 25 mm diameter plates (constant rotation direction). The gap between the plates is 1.2 mm. A 1.2 mm thick polymer sample is inserted between the plates.

The sample is temperature conditioned during 2 min before the measurement is started. The measurement is performed at 190 °C. After temperature conditioning the measurement starts by applying the predetermined stress. The stress is maintained during 1800 s to let the system approach steady state conditions. After this time the measurement starts and the viscosity is calculated.

The measurement principle is to apply a certain torque to the plate axis via a precision motor. This torque is then translated into a shear stress in the sample. This shear stress is kept constant. The rotational speed produced by the shear stress is recorded and used for the calculation of the viscosity of the sample.

Frequency sweep $\omega_c$

This has been defined in the description of PI.

Intrinsic viscosity (IV) measurement

The reduced viscosity (also known as viscosity number), $\eta_{red}$, and intrinsic viscosity, [η], of first high molecular weight polyethylene component are determined according to the principles of ISO 1628-3: "Determination of the viscosity of polymers in dilute solution using capillary viscometers".

Relative viscosities of a diluted polymer solution with concentration between 0.05-0.1 mg/ml and of the pure solvent (decahydronaphthalene stabilised with 200 ppm 2,6-bis(1,1-dimethylethyl)-4-methylphenol) are determined in an automated capillary viscometer (Lauda PVS1) equipped with 4 Ubbelohde capillaries placed in a thermostatic bath filled with silicone oil. The bath temperature is maintained at 135 °C. Each measuring stand is equipped with electronics to control pump, valve function, time measurement, meniscus detection and has a magnetic stirrer. Polymer powder samples are pressed to compressed plaques using a hydraulic press (OMCI 10t hydraulic press) at 190 °C at maximum pressure (10t). The polymer powder is molten at 190 °C between 2-5 minutes. The compressed plaques or polymer granulates are directly placed into the capillary. The capillary is filled with the exact volume of solvent by use of an automatic pipette. The sample is dissolved with constant stirring until complete dissolution is achieved (typically within 300 min).

The efflux time of the polymer solution as well as of the pure solvent are measured several times until three consecutive readings do not differ for more than 0.2 s (standard deviation).

The relative viscosity of the polymer solution is determined as the ratio of averaged efflux times in seconds obtained for both, polymer solution and solvent:

$$\eta_{rel} = \frac{t_{solution} - t_{solvent}}{t_{solvent}} \qquad \text{[dimensionless]}$$

Reduced viscosity ($\eta_{red}$) is calculated using the equation:

$$\eta_{red} = \frac{t_{solution} - t_{solvent}}{t_{solvent} * C} \qquad \text{[dl/g]}$$

where C is the polymer solution concentration at 135 °C: $C=\frac{m}{V\gamma}$,

and m is the polymer mass, V is the solvent volume, and $\gamma$ is the ratio of solvent densities at 20°C and 135°C ($\gamma=\rho_{20}/\rho_{135}=1.107$).

The calculation of intrinsic viscosity [η] is performed by using the Schulz-Blaschke equation from the single concentration measurement:

$$\eta = \frac{\eta_{red}}{1 + K \cdot C \cdot \eta_{red}}$$

where K is a coefficient depending on the polymer structure and concentration. For calculation of the approximate value for [η], K=0.27.

The corresponding Mv values are calculated using the following Mark Houwink equation:

$$Mv = 5.37 \times 10^4 [\eta]^{1.37}.$$

**Examples**

**Catalyst (I) Preparation**

**A.** Preparation of pre-treated support material:

A jacketed 160 $dm^3$ stainless steel reactor equipped with a helical mixing element was pressurized with $N_2$ to 2.0 barg and depressurized down to 0.2 barg until the $O_2$ level was less than 3 ppm. The vessel was then charged with heptane (20.5 kg) and 2,2-di(tetrahydrofuryl)propane (0.520 kg; 2.81 mol; DTHFP). The obtained mixture was stirred for 20 min at 40 rpm. The $MgCl_2$*3EtOH carrier (6.6 kg; DTHFP/Mg = 0.1 mol/mol; 27.5 mol of Mg; Mg 10.18 wt-%, d10 = 9.5 μm, d50 = 17.3 μm and d90 = 28.5 μm, granular shaped) was added to the reactor with stirring. This suspension was cooled to approximately -20 °C and the 33 wt% solution of triethylaluminum (29.8 kg, 84.3 mol of Al; Al/EtOH = 1.0 mol/mol) in heptane was added in aliquots during 3 h 20 min time while keeping the temperature below 10 °C. After the TEA addition, the reaction mixture was gradually heated to 80 °C over a period of 2 h 40 min and kept at this temperature for additional 20 min at 40 rpm. The suspension was allowed to settle for 10 min, and the mother liquor was removed through a 10 μm filter net in the bottom of the reactor during 30 min. The vessel was charged with warm toluene (43 kg) and then stirred at 40 rpm for 20 min at 36-61 °C. The suspension was allowed to settle for 10 min at 50-55 °C and the liquid removed through a 10 μm filter net in the bottom of the reactor during 15 min.

B. Catalyst (I) preparation:

The vessel containing the pre-treated support material was charged with toluene (43 kg) and then cooled to approximately 30 °C. Neat $TiCl_4$ (5.25 kg, 27.5 mol; Ti/Mg =1.0 mol/mol) was added. The obtained suspension was heated to approximately 90 °C over a period of 2 h 15 min and kept at this temperature for additional 1 h with stirring at 40 rpm. The suspension was allowed to settle for 10 min at approximately 90°C and the mother liquor was removed through a 10 μm filter net in the bottom of the reactor during 15 min. The obtained solid material was washed twice with toluene (43 kg each) at ≈ 90°C and once with heptane (34 kg) at ~40 °C. All three of these washing steps used the same sequence of events: addition of preheated (90 or 40 °C) solvent, then stirring at 40 rpm for 30 min, allowing the solid to settle for 10 min, and then removal of liquid through a 10 μm filter net in the bottom of the reactor during 15 min.

The obtained catalyst was mixed with 20 kg of white oil and dried 4 h at 40-50 °C with nitrogen flow (2 kg/h) and vacuum (-1 barg). The catalyst was taken out from the reactor and reactor was flushed with another 20 kg of oil and taken out to the same drum. The dry catalyst yield was 3.76 kg (93.7 % based on Mg).

**Inventive Example 1**

In case prepolymer was prepared a prepolymer loop reactor having a volume of 50 $dm^3$ was operated at a

temperature of 70 °C and a pressure of 56 bar. Into the reactor were fed ethylene, and 1-butene, so that the feed rate of ethylene was 4 kg/h, and 1-butene was 300 g/h and propane was 44 kg/h. Also 4 g/h of a solid polymerisation catalyst component I produced as described hereinbefore in Catalyst Preparation was introduced into the reactor together with triethylaluminium cocatalyst so that the molar ratio of Al/Ti was about 15. The estimated production rate was 3.8 kg/h. The temperature, 1-butene feed, the catalyst feed and the production split are listed for the prepolymer fraction in Table 1.

A stream of slurry was continuously withdrawn and directed to a first loop reactor having a volume of 150 $dm^3$ and which was operated at a temperature of 70 °C and a pressure of 56 bar. Into the reactor were further fed additional ethylene, 1-butene comonomer, propane diluent and hydrogen so that the ethylene concentration in the fluid mixture was 2.5 % by mole. No hydrogen was fed to the first loop reactor, and the fresh propane feed was 80 kg/h. The production rate was 16 kg/h. The temperature, the $H_2/C_2$ ratio, the $C_4/C_2$ ratio, ethylene concentration, the production split and the density of the polymer composition of fraction A1 produced in this first loop reactor are listed in Table 1.

A stream of slurry from the first reactor was withdrawn intermittently and directed into a second loop reactor having a volume of 350 $dm^3$ and which was operated at 95 °C temperature and 54 bar pressure. Into the second reactor was further added a fresh propane feed of 130 kg/h, ethylene and hydrogen so that the ethylene content in the fluid reaction mixture was 4.3 mol-% and the molar ratio of hydrogen to ethylene was 405 mol/kmol. The ethylene copolymer of fraction A2 produced in this second loop reactor including the polymer composition of fraction A1 produced in the first loop reactor and including prepolymer, which were withdrawn from the reactor, had $MFR_2$ of 0.4 g/10 min and density of 936 $kg/m^3$. The production rate was 42 kg/h. The temperature, the $H_2/C_2$ ratio, the $C_4/C_2$ ratio, ethylene concentration, the production split, the density and the $MFR_2$ of the polymer withdrawn from this loop reactor are listed in Table 1.

The slurry was withdrawn from the second loop reactor intermittently and directed to a flash vessel operated at a pressure of 3 bar. From there the polymer was directed to a fluidized bed gas phase reactor operated at a pressure of 20 bar and a temperature of 80 °C. Additional ethylene, 1-hexene comonomer, nitrogen as inert gas and hydrogen were added so that the ethylene content in the fluid reaction mixture was 18.3 mol-%, the ratio of hydrogen to ethylene was 150 mol/kmol and the molar ratio of 1-hexene to ethylene was 10 mol/kmol. The polymer production rate in the gas phase reactor was 40 kg/h and thus the total polymer withdrawal rate from the gas phase reactor was about 100 kg/h. The ethylene copolymer of fraction A3 produced in this gas phase reactor including the polymer compositions of fraction A1 and A2 produced in the first and second loop reactor and including prepolymer, which were withdrawn from the reactor, had a melt flow rate $MFR_5$ of 0,16 g/10 min and a density of 950 $kg/m^3$. The production split (weight-% prepolymer/weight-% 1st stage component/weight-% 2nd stage component/weight-% 3rd stage component) was 4/15/42/39. The temperature, the $H_2/C_2$ ratio, the $C_6/C_2$ ratio, ethylene concentration, the production split, the density and the $MFR_5$ of the polymer fraction A3 produced in this gas phase reactor are listed in Table 1. Also the density, the $MFR_5$ and $MFR_{21}$ of the polymer powder are listed in Table 1.

The polymer powder was mixed under nitrogen atmosphere with 1500 ppm of Ca-stearate, 2200 ppm of Irganox B225 and 58000ppm of HE0880-A (CB MB containing 40% CB). Then it was compounded and extruded under nitrogen atmosphere to pellets by using a CIMP90 extruder so that the SEI was 180 kWh/ton and the melt temperature 250 °C. The density, the $MFR_5$ and the $MFR_{21}$ of pellets are listed in Table 1.

**Inventive Examples 2-8**

No prepolymer was prepared as shown in Table 1. The catalyst II is Lynx 200 as disclosed hereinbefore and it is used in inventive examples (IE) 2-8 differing from inventive example 1. Comonomer of IE 2-6 is same as in IE 1, but the $C_4/C_2$ ratio is different in the first loop reactor. And 1-hexene is used in IE 7-8 as a comonomer differing from IE 1-6. The ethylene concentration, production split and density, of the examples in the first loop reactor varies depending on the example as shown in Table 1. $M_n$, $M_w$, $M_z$, $M_w/M_n$, IV and $M_v$ were measured for the first high molecular weight component of most inventive examples.

In the second loop reactor the $H_2/C_2$ ratio, $C_4/C_2$ ratio, ethylene concentration, production split and density of the examples in the second loop reactor may be different compared to the inventive example 1 and vary depending on the example as shown in Table 1. Also in the second loop reactor 1-hexene is used as a comonomer in IE 7-8 as was the case in the first loop reactor. The $MFR_2$ of the polymer withdrawn from the second loop reactor are listed in Table 1.

In inventive examples 2-8 1-hexene is used as a copolymer in the gas phase reactor, but $C_6/C_2$ ratio varies compared to corresponding reactor of the inventive example 1. Also varies $H_2/C_2$ ratio, ethylene concentration and production split compared to the inventive example 1 of the gas phase reactor. The density, $MFR_5$ and the $MFR_2$ of the polymer withdrawn from the gas phase reactor are listed in Table 1. Also the density, the $MFR_5$ and $MFR_{21}$ of the polymer powder of inventive examples 2-8 are listed in Table 1.

The polymer powder was mixed, compounded and extruded to pellets in the same way as disclosed in pursuance of the inventive example 1. The density, the $MFR_5$ and the $MFR_{21}$ of pellets are listed in Table 1.

**Comparative Examples 1-5**

The catalyst in comparative example CE1 is same as in inventive example IE1. i.e. catalyst I. Polymerisation included same steps as polymerisation of IE1 excluding polymerisation in the first loop reactor whereby the first high molecular weight polyethylene component of fraction A1 was omitted and proceeded directly from prepolymerisation to the second loop reactor and then to the gas phase reactor. Reaction parameters and some properties are disclosed in Table 1.

Comparative example CE2 is Borsafe HE3490-LS-H which is a commercial bimodal HDPE available from Borealis AG.

The catalyst of other comparative examples CE3, CE4 and CE 5 is Lynx 200, which is commercially available Ziegler-Natta catalyst. CE3 and CE4 were prepared starting from prepolymerisation step, but excluding the first loop reactor just as when preparing CE1, and proceeding directly from prepolymerisation to the second loop reactor and then to the gas phase reactor. Therefore the compositions according to CE3 and CE4 comprise no very high molecular weight polyethylene components of fraction A1. CE5 was prepared excluding the prepolymerisation step, but starting from the first loop reactor and then proceeding to the second loop reactor and the gas phase reactor.

Pellets were prepared as disclosed in pursuance of the inventive example 1.

Reaction parameters and properties of the CE1, CE2, CE3, CE4 and CE5 materials including pellets are shown in Table 1.

Table 1

| | IE1 | IE2 | IE3 | IE4 | IE5 | IE6 | IE7 | IE8 | CE1 | CE2 | CE3 | CE4 | CE5 |
|---|---|---|---|---|---|---|---|---|---|---|---|---|---|
| Catalyst | I | II | II | II | II | II | II | II | I | | II | II | II |
| Prepolymer | | | | | | | | | | | | | |
| Temp °C | 70 | | | | | | | | 70 | | 60 | 60 | |
| $C_2$ feed (kg/h) | 4 | | | | | | | | | | | | |
| $C_4$ feed (g/h) | 300 | | | | | | | | | | | | |
| $H_2$ feed (g/h) | 0 | | | | | | | | 40 | | 10 | 9 | |
| Catalyst feed (g/h) | 4 | | | | | | | | 9 | | 2 | 1 | |
| Split (wt%) | 4 | | | | | | | | 5 | | 2 | 3 | |
| 1st Loop: | | | | | | | | | | | | | |
| Temp °C | 70 | 70 | 70 | 70 | 70 | 70 | 70 | 70 | | | | | 95 |
| $H_2/C_2$ (mol/kmol) | 0 | 0 | 0 | 0 | 0 | 0 | 0 | 0 | | | | | 759 |
| $C_4/C_2$ (mol/kmol) | 22 | 251 | 258 | 270 | 260 | 56 | 0 | 0 | | | | | 0 |
| $C_6/C_2$ (mol/kmol) | | | | | | | 8 | 8 | | | | | |
| Ethylene concentration (mol-%) | 2.5 | 0.6 | 0.6 | 0.3 | 0.3 | 1.7 | 1.7 | 1.8 | | | | | 2.6 |
| Split % | 15 | 10 | 10 | 6 | 6 | 15 | 15 | 15 | | | | | 22 |
| Density (kg/m$^3$) | | 922 | | 919 | 919 | 924 | | | | | | | |
| $MFR_2$ (g/10 min) | 0 | 0 | | | | | | | | | | | 310 |
| $M_n$ (kg/mol) | | 58.2 | | 54.0 | 53.4 | 93.4 | 102.5 | | | | | | |
| $M_w$ (kg/mol) | | 530 | | 389 | 407 | 710 | 739 | | | | | | |
| $M_z$ (kg/mol) | | 1915 | | 1455 | 1590 | 2185 | 2195 | | | | | | |
| $M_w/M_n$ | | 9 | | 7 | 8 | 8 | 7 | | | | | | |
| IV (dl/g) | | 7 | | 5 | 5 | 9 | 9 | | | | | | |
| $M_v$ (kg/mol) | | 762 | | 495 | 524 | 1030 | 1150 | | | | | | |

(continued)

| | | | | | | | | | | | | |
|---|---|---|---|---|---|---|---|---|---|---|---|---|
| 2nd Loop: | | | | | | | | | | | | |
| Temp °C | 95 | 95 | 95 | 95 | 95 | 95 | 95 | 95 | 95 | | 95 | 95 | 95 |
| $H_2/C_2$ (mol/kmol) | 405 | 458 | 383 | 386 | 427 | 422 | 431 | 412 | 401 | | 696 | 661 | 799 |
| $C_4/C_2$ (mol/kmol) | 49 | 12 | 12 | 4 | 5 | 6 | 0 | 0 | 0 | | 0 | 0 | 0 |
| $C_6/C_2$ (mol/kmol) | | | | | | | 2 | 2 | | | 0 | 0 | 0 |
| Ethylene concentration (mol-%) | 4.3 | 3.5 | 3.7 | 5.1 | 4.9 | 4 | 3.5 | 3.6 | 3.2 | | 3.8 | 3.8 | 2.5 |
| Split % | 42 | 52 | 52 | 56 | 58 | 47 | 48 | 47 | 55 | | 50 | 49 | 33 |
| Density (kg/m$^3$) | 936 | 961 | 959 | 962 | 963 | 960 | 960 | 960 | | | | | |
| $MFR_2$ (g/10 min) | 0.4 | 12.2 | 6.8 | 15.3 | 25.9 | 3.2 | 3.7 | 2.1 | 173 | | 388 | 315 | 263 |
| $M_n$ (kg/mol)* | 7.6 | 6.6 | 7.5 | 7.3 | | 7.2 | 7.3 | | | | | | |
| $M_w$ (kg/mol)* | 333 | 105 | 115 | 76 | | 194 | 209 | | | | | | |
| $M_z$ (kg/mol)* | 2455 | 1300 | 1315 | 784 | | 1820 | 1925 | | | | | | |
| $M_w/M_n$ * | 44 | 16 | 15 | 10 | | 27 | 28 | | | | | | |
| Calculated Mw of A2 (kg/mol)** | | 23 | | 43 | | 29 | 43 | | | | | | |
| Gas phase: | | | | | | | | | | | | | |
| Temp °C | 80 | 80 | 80 | 80 | 80 | 80 | 80 | 80 | 85 | | 85 | 85 | 85 |
| $H_2/C_2$ (mol/kmol) | 150 | 14 | 19 | 7 | 12 | 42 | 46 | 53 | 8 | | 18 | 31 | 8 |
| $C_6/C_2$ (mol/kmol) | 10 | 13 | 13 | 18 | 6 | 13 | 12 | 12 | 30 | | 25 | 41 | 10 |
| Ethylene concentration (mol-%) | 18.3 | 11.3 | 12.3 | 8.4 | 8.8 | 12.3 | 11.8 | 12.1 | 4.3 | | 13.5 | 12.6 | 7.4 |
| Split % | 39 | 38 | 38 | 38 | 36 | 38 | 37 | 38 | 40 | | 48 | 48 | 45 |
| Density (kg/m$^3$) | 950 | 950 | 951 | 950 | 952 | 951 | 951 | 951 | 951 | | 952 | 949 | 953 |
| $MFR_5$ (g/10 min) | 0.2 | 0.1 | 0.2 | 0.2 | 0.1 | 0.2 | 0.1 | 0.2 | 0.3 | | 0.2 | 0.3 | 0.1 |
| $MFR_{21}$ (g/10 min) | | 4.2 | 5.3 | 6.8 | 4.5 | 4.4 | 3.7 | 4.7 | 13.2 | | 7 | 9.1 | 5.5 |

(continued)

| | | | | | | | | | | | | | |
|---|---|---|---|---|---|---|---|---|---|---|---|---|---|
| PE Mixer: | | | | | | | | | | | | | |
| Density ($kg/m^3$) | 950 | 950 | 951 | 951 | 953 | 951 | 952 | 952 | 952 | | 952 | 950 | 954 |
| $MFR_5$ (g/10 min) | 0.2 | 0.1 | 0.2 | 0.2 | 0.2 | 0.1 | 0.1 | 0.1 | 0.2 | | 0.2 | 0.4 | 0.1 |
| $MFR_{21}$ (g/10 min) | 4.7 | 4.1 | 5.7 | 7.5 | 5.4 | 4.1 | 4 | 4.2 | 12.4 | | 6.8 | 11 | 5.4 |
| PE Pellet: | | | | | | | | | | | | | |
| $MFR_5$ (g/10 min) | 0.2 | 0.1 | 0.2 | 0.2 | 0.1 | 0.1 | 0.1 | 0.2 | 0.2 | 0.2 | 0.2 | 0.3 | 0.2 |
| $MFR_{21}$ (g/10 min) | 4.7 | 4.5 | 5.6 | 7.7 | 4.7 | 4.2 | 4.3 | 5.1 | 9 | 9 | 8.9 | 11 | 6.6 |
| Density ($kg/m^3$) | 962 | 961 | 961 | 962 | 964 | 962 | 964 | 964 | 962 | 959 | 964 | 961 | 961 |

*Prepol + A1 +A2

**Mw of A2 fraction is calculated via the following equation (ref: McAuley, K. B. & MacGregor, J. F. On-line inference of polymer properties in an industrial polyethylene reactor. AIChE Journal 37, 825-835, (1991)): $\overline{M}_w = w_A\overline{M}_{wA} + w_B\overline{M}_{wB}$

**Properties of Compositions**

Selected properties of polymer compositions of inventive examples 1-8 and comparative examples 1-5 are shown in table 2.

Table 2

| | IE1 | IE2 | IE3 | IE4 | IE5 | IE6 | IE7 | IE8 | CE1 | CE2 | CE3 | CE4 | CE5 |
|---|---|---|---|---|---|---|---|---|---|---|---|---|---|
| Eta 747 (kPa.s) | 965 | 1953 | 1317 | 1099 | 2055 | 1382 | 1689 | 1369 | 1195 | 479 | | | |
| $Eta_{0.05\ rad/s}$ (kPa.s) | 244 | | | 229 | 362 | 266 | 293 | 255 | 297 | 168 | | | |
| $Eta_{300\ rad/s}$ (kPa.s) | 1.392 | | | 1.131 | 1.340 | 1.355 | 1.393 | 1.266 | 1.019 | 1.072 | | | |
| PI ($Pa^{-1}$) | 3.4 | | | 4.9 | 5 | 4 | 3.9 | 4.3 | 4.8 | 3.6 | | | |
| $\omega_c$ (rad/s) | 0.5 | | | 0.3 | 0.1 | 0.3 | 0.3 | 0.3 | 0.2 | 0.8 | | | |
| $M_n$ (kg/mol)* | 10.55 | 9.87 | 10.1 | 9.95 | 10.55 | 9.82 | 9.61 | 9.29 | 8.0 | 7.96 | | | |
| $M_w$ (kg/mol)* | 273 | 305 | 270 | 252 | 293 | 275 | 286 | 265 | 312 | 234 | | | |
| $M_z$ (kg/mol)* | 1540 | 1730 | 1560 | 1435 | 1700 | 1555 | 1625 | 1520 | 2321 | 1390 | | | |
| $M_w/M_n$* | 26 | 31 | 27 | 25 | 28 | 28 | 30 | 29 | 39 | 29 | | | |
| Calculated Mw of A3 (kg/mol)** | | 632 | | 539 | | 408 | 418 | | | | | | |
| Wear index (Taber CS-17, mg/1000 cycles) | 12 | 10 | 10 | 12 | 10 | 10 | 8 | 9 | 14 | 18 | | | |
| STPT 80 °C, 6.2 MPa (h) | 119 | 353 | 754 | 91 | 288 | 416 | 535 | 125 | | | 77 | 6 | 15 |
| STPT 80°C, 6.2 MPa (h) | 345 | 373 | 828 | 98 | 466 | 430 | 571 | 286 | | | 28 | 6 | 64 |
| STPT 80 °C, 5.9 MPa (h) | 1205 | 2722 | 2676 | 1435 | 499 | 643 | 672 | 297 | | | | | |
| STPT 80°C, 5.9 MPa (h) | 2341 | 4084 | 1215 | 3198 | 313 | 1088 | 1842 | 443 | | | | | |
| S4, Tc (°C) | -19 | -20 | -18 | -16 | -30 | -23 | -22 | -21 | | >-12 | | | -12 |
| Impact strength at 0 °C (KJ/m2) | 22 | 27 | 24 | 22 | 28 | 25 | 26 | 24 | 29 | | | | |

| | | | | | | | | | | | | |
|---|---|---|---|---|---|---|---|---|---|---|---|---|
| Impact strength at -20 °C (KJ/m2) | 16 | 20 | 16 | 15 | 25 | 20 | 20 | 19 | 16 | | | |

*Prepol + A1 +A2 +A3

**Mw of A3 fraction is calculated via the following equation (ref: McAuley, K. B. & MacGregor, J. F. On-line inference of polymer properties in an industrial polyethylene reactor. AIChE Journal 37, 825-835, (1991)): $\overline{M}_w = w_A\overline{M}_{wA} + w_B\overline{M}_{wB}$

It is apparent from the results of Table 2 that the wear index of the inventive examples is significantly lower than the comparative examples showing improved abrasion resistance, which is needed in hard circumstances, for instance in mining and construction industries. To avoid crack initiation points a good abrasion resistance is needed. Also short term pressure tests of the inventive examples indicate significantly improved pressure resistances tested at 6.2 MPa and 80 °C compared to the tests made with the comparative examples. Further the tests of the inventive examples showed improved rapid crack propagation resistance (RCPR) expressed by the critical temperature (reduced $T_{crit}$) when compared to the comparative examples. RCP resistance is important when the product is in contact with hard and sharp objects. It is also a positive fact that the Charpy notched impact strength measured at 0 °C and -20 °C exhibits very good impact properties. This all means that the compositions of the inventive examples have significant advantages over the ones known in the art.

The written description includes examples of the invention to enable persons skilled in the art to produce and exploit the invention. However, the claims define the scope of protection, which may cover also other examples of the invention. Such examples may have elements that belong to the literal language of the claims or they are equivalent including only minor differences from the literal language of the claims.

## Claims

**1.** A polymer composition comprising a base resin which comprises at least three polymer components:

(a) a first high molecular weight polyethylene component as fraction A1, wherein a weight average molecular weight ($M_w$) of the first high molecular weight polyethylene component is at least 250000 g/mol;
(b) a low molecular weight polyethylene component as fraction A2, wherein a calculated weight average molecular weight ($M_w$) of the low molecular weight polyethylene component is at most 70000 g/mol; and
(c) a second high molecular weight polyethylene component as fraction A3, wherein a calculated weight average molecular weight ($M_w$) of the second high molecular weight polyethylene component is at least 250000 g/mol, but the weight average molecular weight of the second high molecular weight component being different from the weight average molecular weight of the first high molecular weight component,

wherein

(I) the ratio of the weight average molecular weight and the number average molecular weight ($M_w/M_n$) of the first high molecular weight polyethylene component is greater than 5;
(II) the first high molecular weight polyethylene component of fraction A1 has a density of equal to or less than 930 kg/$m^3$ and an intrinsic viscosity of less than 15 dl/g;
(III) the base resin has a melt flow rate $MFR_5$ of equal to or less than 0.40 g/10 min; and
(IV) the composition has a viscosity at a shear stress of 747 Pa (eta747) of equal to or higher than 900 kPas.

**2.** A polyethylene composition according to claim 1, wherein

(i) an amount of the first high molecular weight polyethylene component in the base resin is 2 to 25 wt%, preferably 3 to 20 wt%, more preferably 5 to 18 wt%, which first high molecular weight polyethylene component is an ethylene homo- or copolymer having at least one C3 - C20 alpha olefin comonomer;
(ii) an amount of the low molecular weight polyethylene component in the base resin is 30 to 70 wt%, preferably 35 to 65wt%, more preferably 40 to 60 wt%, which low molecular weight polyethylene component is an ethylene

homo- or copolymer with at least one C3 - C20 alpha olefin comonomer; and
(iii) an amount of the second high molecular weight polyethylene component in the base resin is 25 to 60 wt%, preferably 30 to 50 wt%, more preferably 32 to 45 wt%, which second high molecular weight polyethylene component is an ethylene copolymer with at least one C3 - C20 alpha olefin comonomer.

**3.** A polyethylene composition according to claim 1 or 2, wherein the first high molecular weight polyethylene component and the low molecular weight polyethylene component are ethylene copolymers, preferably wherein the first high molecular weight polyethylene component, the low molecular weight polyethylene component and second high molecular weight polyethylene component are ethylene copolymers.

**4.** A polyethylene composition according to any one of the preceding claims, wherein the base resin has a density of 935 to 965 kg/m$^3$, preferably 940 to 960 kg/m$^3$, more preferably 945 to 955 kg/m$^3$, even more preferably 948 to 955 kg/m$^3$.

**5.** A polyethylene composition according to any one of the preceding claims, wherein an intrinsic viscosity of the first high molecular weight polyethylene component is equal to or higher than 4.0 dl/g, preferably equal to or higher than 4.5 dl/g, more preferably equal to or higher than 5 dl/g.

**6.** A polyethylene composition according to any one of the preceding claims, wherein the weight average molecular weight of the first high molecular weight polyethylene component is greater than the weight average molecular weight of the second high molecular weight polyethylene component.

**7.** A polyethylene composition according to any one of the preceding claims, wherein a weight average molecular weight ($M_w$) of the first high molecular weight polyethylene component is at least 280000 g/mol, preferably at least 310000 g/mol; and/or wherein a weight average molecular weight ($M_w$) of the first high molecular weight polyethylene component is at most 10000000 g/mol, preferably at most 900000 g/mol, more preferably at most 800000 g/mol.

**8.** A polyethylene composition according to any one of the preceding claims, wherein a calculated weight average molecular weight ($M_w$) of the low molecular weight polyethylene component is at least 10000 g/mol, preferably at least 15000 g/mol, more preferably at least 20000 g/mol; and/or
wherein a calculated weight average molecular weight ($M_w$) of the low molecular weight polyethylene component is at most 60000 g/mol.

**9.** A polyethylene composition according to any one of the preceding claims, wherein a calculated weight average molecular weight ($M_w$) of the second high molecular weight polyethylene component is at least 280000 g/mol, preferably at least 310000 g/mol; and/or
wherein a calculated weight average molecular weight ($M_w$) of the second high molecular weight polyethylene component is at most 1000000 g/mol, preferably at most 900000 g/mol.

**10.** A polyethylene composition according to any one of the preceding claims, wherein the polymer composition comprising a base resin is polymerised in at least one slurry phase reactor and at least one gas phase reactor, preferably wherein the polymer composition comprising a base resin is polymerised in two slurry phase reactors and one gas phase reactor, more preferably wherein the first high molecular weight polyethylene component of fraction A1 and the low molecular weight polyethylene component of fraction A2 are polymerised in sequential slurry phase reactors, which are preferably loop reactors, and the second high molecular weight polyethylene component of fraction A3 is polymerised in a gas phase reactor.

**11.** A polyethylene composition according to any one of the preceding claims, wherein the polyethylene composition has an impact strength at 0 °C of at least 19 kJ/m$^2$, preferably at least 20 kJ/m$^2$, more preferably at least 21 kJ/m$^2$ in a Charpy notched test according to ISO 179/1eA:2000;

wherein the polyethylene composition has a viscosity at a shear stress of 747 PA (eta747) of more than 1250 kPas; and
wherein the polyethylene composition has a viscosity at a shear stress of 747 Pa (eta747) of equal to or less than 3000 kPas, preferably equal to or less than 2500 kPas, more preferably equal to or less than 2200 kPas.

**12.** A polyethylene composition according to any one of the preceding claims, wherein the base resin has a melt flow rate $MFR_{21}$ of 2.0 to 12.0 g/10 min, preferably of 2.5 to 10.0 g/10 min, more preferably of 3.0 to 9.0 g/10 min.

**13.** A polyethylene composition according to any one of the preceding claims, wherein the first high molecular weight polyethylene component of fraction A1 has a density of equal to or less than 929 $kg/m^3$, preferably equal to or less than 928 $kg/m^3$.

**14.** An article, such as a pipe or fitting, made of the polyethylene composition as defined in any one of the preceding claims.

**15.** Use of the polyethylene composition as defined in any one of the preceding claims for the production of an article.

**16.** A process for the production of a polymer composition comprising a base resin, which comprises steps of

(a) polymerising ethylene and optionally at least one comonomer in the presence of a polymerisation catalyst to form a first high molecular weight polyethylene component of fraction A1, wherein a weight average molecular weight ($M_w$) of the first high molecular weight polyethylene component is at least 250000 g/mol; and polymerising ethylene and optionally at least one comonomer in the presence of same or different polymerisation catalyst(s) as polymerising the first high molecular weight polyethylene component to form a low molecular weight polyethylene component of fraction A2, wherein a calculated weight average molecular weight ($M_w$) of the low molecular weight polyethylene component is at most 70000 g/mol; and
(c) polymerising ethylene and optionally at least one comonomer in the presence of same or different polymerisation catalyst(s) as polymerising the first high molecular weight polyethylene component to form a second high molecular weight polyethylene component of fraction A3, wherein a calculated weight average molecular weight ($M_w$) of the second high molecular weight polyethylene component is at least 250000 g/mol, but the weight average molecular weight of the second high molecular weight component being different from the weight average molecular weight of the first high molecular weight component,

wherein

(i) at least one of the catalyst(s) is a Ziegler-Natta (ZN) catalyst;
(ii) the ratio of the weight average molecular weight and the number average molecular weight ($M_w/M_n$) of the first high molecular weight polyethylene component is greater than 5;
(iii) the first high molecular weight polyethylene component of fraction A1 has a density of equal to or less than 930 $kg/m^3$, and an intrinsic viscosity of equal to or less than 15 dl/g;
(iv) the base resin has a melt flow rate $MFR_5$ of equal to or less than 0.40 g/10 min; and
(v) the composition has a viscosity at a shear stress of 747 Pa (eta747) of equal to or higher than 900 kPas.

**17.** The process according to claim 16, wherein the Ziegler-Natta (ZN) catalyst comprises an internal organic compound having the formula (I):

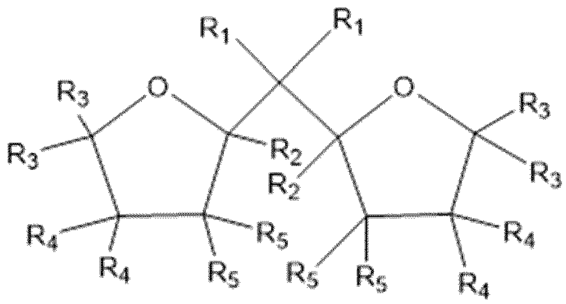

(I)

wherein in the formula (I) $R_1$ to $R_5$ are the same or different and can be hydrogen, a linear or branched C1 to $C_8$-alkyl group, or a $C_3$-$C_8$-alkylene group, or two or more of $R_1$ to $R_5$ can form a ring, and the two oxygen-containing rings are individually saturated or partially unsaturated or unsaturated.

**18.** The process according to claim 17 comprising the additional steps of (a) providing solid carrier particles of $MgCl_2$*mROH adduct; (b) pre-treating the solid carrier particles of step (a) with a compound of Group 13 metal; (c) treating the pre-treated solid carried particles of step (b) with a transition metal compound of Group 4 to 6; (d) recovering the solid catalyst component; (e) contacting the solid carrier particles with the internal organic compound having the formula (I) prior to the step (c); and (f) passing the solid catalyst component into the first polymerisation

stage, wherein R in the adduct $MgCl_2$*mROH is a linear or branched alkyl group with 1 to 12 carbon atoms and m is a number from 0 to 6.

**19.** The process according to claims 16-18, wherein the polymer composition comprising a base resin is polymerised in two slurry phase reactors and one gas phase reactor, preferably wherein the polymer composition comprising a base resin is polymerised in two slurry phase reactors and one gas phase reactor, more preferably wherein the first high molecular weight polyethylene component of fraction A1 and the low molecular weight polyethylene component of fraction A2 are polymerised in sequential slurry phase reactors, which are preferably loop reactors, and the second high molecular weight polyethylene component of fraction A3 is polymerised in a gas phase reactor.

**Patentansprüche**

**1.** Eine Polymerzusammensetzung, die ein Basisharz umfasst, das mindestens drei Polymerkomponenten enthält:

(a) eine erste hochmolekulare Polyethylenkomponente als Fraktion A1, wobei das gewichtsmittlere Molekulargewicht ($M_w$) der ersten hochmolekularen Polyethylenkomponente mindestens 250000 g/mol beträgt;
(b) eine niedermolekulare Polyethylenkomponente als Fraktion A2, wobei das berechnete gewichtsmittlere Molekulargewicht ($M_w$) der niedermolekularen Polyethylenkomponente höchstens 70000 g/mol beträgt; und
(c) eine zweite hochmolekulare Polyethylenkomponente als Fraktion A3, wobei das berechnete gewichtsmittlere Molekulargewicht ($M_w$) der zweiten hochmolekularen Polyethylenkomponente mindestens 250000 g/mol beträgt, aber das gewichtsmittlere Molekulargewicht der zweiten hochmolekularen Komponente sich von dem gewichtsmittleren Molekulargewicht der ersten hochmolekularen Komponente unterscheidet,

wobei

(I) das Verhältnis des gewichtsmittleren Molekulargewichts und des zahlenmittleren Molekulargewichts ($M_w/M_n$) der ersten hochmolekularen Polyethylenkomponente größer als 5 ist;
(II) die erste hochmolekulare Polyethylenkomponente der Fraktion A1 eine Dichte von gleich oder weniger als 930 kg/$m^3$ und eine Grenzviskosität von weniger als 15 dl/g aufweist;
(III) das Basisharz eine Schmelzflussrate $MFR_5$ von gleich oder weniger als 0,40 g/10 min aufweist; und
(IV) die Zusammensetzung eine Viskosität bei einer Scherbeanspruchung von 747 Pa (eta747) von gleich oder mehr als 900 kPas aufweist.

**2.** Polyethylen-Zusammensetzung gemäß Anspruch 1, wobei

(i) eine Menge der ersten hochmolekularen Polyethylenkomponente in dem Basisharz 2 bis 25 Gew.-%, vorzugsweise 3 bis 20 Gew.-%, stärker bevorzugt 5 bis 18 Gew.-% beträgt, wobei die erste hochmolekulare Polyethylenkomponente ein Ethylenhomo- oder -copolymer mit mindestens einem C3-C20-Alpha-Olefin-Comonomer ist;
(ii) eine Menge der niedermolekularen Polyethylenkomponente in dem Basisharz 30 bis 70 Gew.-%, vorzugsweise 35 bis 65 Gew.-%, stärker bevorzugt 40 bis 60 Gew.-% beträgt, wobei die niedermolekulare Polyethylenkomponente ein Ethylenhomo- oder -copolymer mit mindestens einem C3-C20-Alpha-Olefin-Comonomer ist; und
(iii) eine Menge der zweiten hochmolekularen Polyethylenkomponente im Basisharz 25 bis 60 Gew.-%, vorzugsweise 30 bis 50 Gew.-%, noch bevorzugter 32 bis 45 Gew.-% beträgt, wobei die zweite hochmolekulare Polyethylenkomponente ein Ethylen-Copolymer mit mindestens einem C3-C20-Alpha-Olefin-Comonomer ist.

**3.** Polyethylen-Zusammensetzung gemäß Anspruch 1 oder 2, wobei die erste hochmolekulare Polyethylenkomponente und die niedermolekulare Polyethylenkomponente Ethylencopolymere sind, vorzugsweise wobei die erste hochmolekulare Polyethylenkomponente, die niedermolekulare Polyethylenkomponente und die zweite hochmolekulare Polyethylenkomponente Ethylencopolymere sind.

**4.** Polyethylen-Zusammensetzung gemäß einem der vorhergehenden Ansprüche, wobei das Basisharz eine Dichte von 935 bis 965 kg/$m^3$, vorzugsweise 940 bis 960 kg/$m^3$, noch bevorzugter 945 bis 955 kg/$m^3$, noch bevorzugter 948 bis 955 kg/$m^3$ aufweist.

**5.** Polyethylen-Zusammensetzung gemäß einem der vorhergehenden Ansprüche, wobei die Grenzviskosität der ersten

hochmolekularen Polyethylenkomponente gleich oder höher als 4,0 dl/g, vorzugsweise gleich oder höher als 4,5 dl/g, noch bevorzugter gleich oder höher als 5 dl/g ist.

**6.** Polyethylen-Zusammensetzung gemäß einem der vorhergehenden Ansprüche, wobei das gewichtsmittlere Molekulargewicht der ersten hochmolekularen Polyethylenkomponente größer ist als das gewichtsmittlere Molekulargewicht der zweiten hochmolekularen Polyethylenkomponente.

**7.** Polyethylen-Zusammensetzung gemäß einem der vorhergehenden Ansprüche, wobei das gewichtsmittlere Molekulargewicht ($M_w$) der ersten hochmolekularen Polyethylenkomponente mindestens 280000 g/mol, vorzugsweise mindestens 310000 g/mol beträgt; und/oder
wobei das gewichtsmittlere Molekulargewicht ($M_w$) der ersten hochmolekularen Polyethylenkomponente höchstens 10000000 g/mol, vorzugsweise höchstens 900000 g/mol, noch bevorzugter höchstens 800000 g/mol beträgt.

**8.** Polyethylen-Zusammensetzung gemäß einem der vorhergehenden Ansprüche, wobei das berechnete gewichtsmittlere Molekulargewicht ($M_w$) der niedermolekularen Polyethylenkomponente mindestens 10000 g/mol, vorzugsweise mindestens 15000 g/mol, noch bevorzugter mindestens 20000 g/mol beträgt; und/oder
wobei das berechnete gewichtsmittlere Molekulargewicht ($M_w$) der niedermolekularen Polyethylenkomponente höchstens 60000 g/mol beträgt.

**9.** Polyethylen-Zusammensetzung gemäß einem der vorhergehenden Ansprüche, wobei das berechnete gewichtsmittlere Molekulargewicht ($M_w$) der zweiten hochmolekularen Polyethylenkomponente mindestens 280000 g/mol, vorzugsweise mindestens 310000 g/mol beträgt; und/oder
wobei das berechnete gewichtsmittlere Molekulargewicht ($M_w$) der zweiten hochmolekularen Polyethylenkomponente höchstens 1000000 g/mol, vorzugsweise höchstens 900000 g/mol beträgt.

**10.** Polyethylen-Zusammensetzung gemäß einem der vorhergehenden Ansprüche, wobei die Polymerzusammensetzung, die ein Basisharz umfasst, in mindestens einem Suspensionsphasenreaktor und mindestens einem Gasphasenreaktor polymerisiert wird, vorzugsweise wobei die Polymerzusammensetzung, die ein Basisharz umfasst, in zwei Suspensionsphasenreaktoren und einem Gasphasenreaktor polymerisiert wird, noch bevorzugter, wobei die erste hochmolekulare Polyethylenkomponente der Fraktion A1 und die niedermolekulare Polyethylenkomponente der Fraktion A2 in aufeinanderfolgenden Suspensionsphasenreaktoren, die vorzugsweise Schlaufenreaktoren sind, polymerisiert werden und die zweite hochmolekulare Polyethylenkomponente der Fraktion A3 in einem Gasphasenreaktor polymerisiert wird.

**11.** Polyethylen-Zusammensetzung gemäß einem der vorhergehenden Ansprüche, wobei die Polyethylen-Zusammensetzung eine Schlagzähigkeit bei 0 °C von mindestens 19 kJ/m$^2$, vorzugsweise mindestens 20 kJ/m$^2$, besonders bevorzugt mindestens 21 kJ/m$^2$ in einem Charpy-Kerbversuch gemäß ISO 179/1eA:2000 aufweist;

wobei die Polyethylen-Zusammensetzung eine Viskosität bei einer Scherspannung von 747 PA (eta747) von mehr als 1250 kPas aufweist; und
wobei die Polyethylen-Zusammensetzung eine Viskosität bei einer Scherbeanspruchung von 747 Pa (eta747) von gleich oder weniger als 3000 kPas, vorzugsweise gleich oder weniger als 2500 kPas, noch bevorzugter gleich oder weniger als 2200 kPas aufweist.

**12.** Polyethylen-Zusammensetzung gemäß einem der vorhergehenden Ansprüche, wobei das Basisharz eine Schmelzflussrate $MFR_{21}$ von 2,0 bis 12,0 g/10 min, vorzugsweise von 2,5 bis 10,0 g/10 min, besonders bevorzugt von 3,0 bis 9,0 g/10 min aufweist.

**13.** Polyethylen-Zusammensetzung gemäß einem der vorhergehenden Ansprüche, wobei die erste hochmolekulare Polyethylenkomponente der Fraktion A1 eine Dichte von gleich oder weniger als 929 kg/m$^3$, vorzugsweise gleich oder weniger als 928 kg/m$^3$ aufweist.

**14.** Gegenstand, wie z.B. ein Rohr oder ein Fitting, hergestellt aus der Polyethylen-Zusammensetzung nach einem der vorhergehenden Ansprüche.

**15.** Verwendung der Polyethylen-Zusammensetzung nach einem der vorhergehenden Ansprüche zur Herstellung eines Gegenstandes.

**16.** Verfahren zur Herstellung einer Polymerzusammensetzung, die ein Basisharz umfasst, das die folgenden Schritte umfasst

(a) Polymerisieren von Ethylen und gegebenenfalls mindestens einem Comonomer in Gegenwart eines Polymerisationskatalysators, um eine erste Polyethylenkomponente mit hohem Molekulargewicht der Fraktion A1 zu bilden, wobei das gewichtsmittlere Molekulargewicht ($M_w$) der ersten Polyethylenkomponente mit hohem Molekulargewicht mindestens 250000 g/mol beträgt; und
(b) Polymerisieren von Ethylen und gegebenenfalls mindestens einem Comonomer in Gegenwart desselben oder eines anderen Polymerisationskatalysators bzw. derselben oder verschiedener Polymerisationskatalysatoren wie beim Polymerisieren der ersten hochmolekularen Polyethylenkomponente, um eine niedermolekulare Polyethylenkomponente der Fraktion A2 zu bilden, wobei das berechnete gewichtsmittlere Molekulargewicht ($M_w$) der niedermolekularen Polyethylenkomponente höchstens 70000 g/mol beträgt; und
(c) Polymerisieren von Ethylen und gegebenenfalls mindestens einem Comonomer in Gegenwart desselben oder eines anderen Polymerisationskatalysators bzw. derselben oder verschiedener Polymerisationskatalysatoren wie beim Polymerisieren der ersten hochmolekularen Polyethylenkomponente, um eine zweite hochmolekulare Polyethylenkomponente der Fraktion A3 zu bilden, wobei das berechnete gewichtsmittlere Molekulargewicht ($M_w$) der zweiten hochmolekularen Polyethylenkomponente mindestens 250000 g/mol beträgt, das gewichtsmittlere Molekulargewicht der zweiten hochmolekularen Komponente jedoch von dem gewichtsmittleren Molekulargewicht der ersten hochmolekularen Komponente verschieden ist,

wobei

(i) mindestens einer der Katalysatoren ein Ziegler-Natta (ZN)-Katalysator ist;
(ii) das Verhältnis des gewichtsmittleren Molekulargewichts und des zahlenmittleren Molekulargewichts ($M_w/M_n$) der ersten hochmolekularen Polyethylenkomponente größer als 5 ist;
(iii) die erste hochmolekulare Polyethylenkomponente der Fraktion A1 eine Dichte von gleich oder weniger als 930 $kg/m^3$ und eine Grenzviskosität von gleich oder weniger als 15 dl/g aufweist;
(iv) das Basisharz eine Schmelzflussrate $MFR_5$ von gleich oder weniger als 0,40 g/10 min hat; und
(v) die Zusammensetzung eine Viskosität bei einer Scherbeanspruchung von 747 Pa (eta747) von gleich oder mehr als 900 kPas aufweist.

**17.** Verfahren gemäß Anspruch 16, wobei der Ziegler-Natta (ZN)-Katalysator eine interne organische Verbindung mit der Formel (I) umfasst:

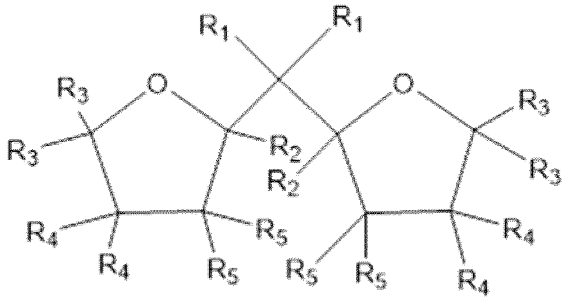

(I)

wobei in der Formel (I) $R_1$ bis $R_5$ gleich oder verschieden sind und Wasserstoff, eine lineare oder verzweigte C1- bis C8-Alkylgruppe oder eine C3- bis C8-Alkylengruppe sein können, oder zwei oder mehr von $R_1$ bis $R_5$ einen Ring bilden können und die beiden sauerstoffhaltigen Ringe einzeln gesättigt oder teilweise ungesättigt oder ungesättigt sind.

**18.** Verfahren gemäß Anspruch 17, umfassend die zusätzlichen Schritte: (a) Bereitstellen von festen Trägerteilchen aus $MgCl_2$*mROH-Addukt; (b) Vorbehandeln der festen Trägerteilchen aus Schritt (a) mit einer Verbindung eines Metalls der Gruppe 13; (c) Behandeln der vorbehandelten festen Trägerteilchen aus Schritt (b) mit einer Übergangsmetallverbindung der Gruppe 4 bis 6; (d) Gewinnen der festen Katalysatorkomponente; (e) Inkontaktbringen der festen Trägerteilchen mit der inneren organischen Verbindung mit der Formel (I) vor dem Schritt (c); und (f) Leiten der festen Katalysatorkomponente in die erste Polymerisationsstufe, wobei R in dem Addukt $MgCl_2$*mROH eine lineare oder verzweigte Alkylgruppe mit 1 bis 12 Kohlenstoffatomen ist und m eine Zahl von 0 bis 6 ist.

**19.** Verfahren gemäß den Ansprüchen 16 bis 18, wobei die ein Basisharz umfassende Polymerzusammensetzung in zwei Schlammphasenreaktoren und einem Gasphasenreaktor polymerisiert wird, vorzugsweise wobei die ein Basisharz umfassende Polymerzusammensetzung in zwei Schlammphasenreaktoren und einem Gasphasenreaktor polymerisiert wird, noch bevorzugter, wobei die erste hochmolekulare Polyethylenkomponente der Fraktion A1 und die niedermolekulare Polyethylenkomponente der Fraktion A2 in aufeinanderfolgenden Suspensionsphasenreaktoren, die vorzugsweise Schlaufenreaktoren sind, polymerisiert werden und die zweite hochmolekulare Polyethylenkomponente der Fraktion A3 in einem Gasphasenreaktor polymerisiert wird.

**Revendications**

**1.** Composition de polymère comprenant une résine de base qui comprend au moins trois composants polymères :

(a) un premier composant de type polyéthylène de poids moléculaire élevé en tant que fraction A1, dans laquelle un poids moléculaire moyen en poids ($M_w$) du premier composant de type polyéthylène de poids moléculaire élevé est d'au moins 250 000 g/mol ;
(b) un composant de type polyéthylène de poids moléculaire bas en tant que fraction A2, dans laquelle un poids moléculaire moyen en poids ($M_w$) calculé du composant de type polyéthylène de poids moléculaire bas est d'au plus 70 000 g/mol ; et
(c) un second composant de type polyéthylène de poids moléculaire élevé en tant que fraction A3, dans laquelle un poids moléculaire moyen en poids ($M_w$) calculé du second composant de type polyéthylène de poids moléculaire élevé est d'au moins 250 000 g/mol, mais le poids moléculaire moyen en poids du second composant de poids moléculaire élevé étant différent du poids moléculaire moyen en poids du premier composant de poids moléculaire élevé,

dans laquelle

(I) le rapport du poids moléculaire moyen en poids et du poids moléculaire moyen en nombre ($M_w/M_n$) du premier composant de type polyéthylène de poids moléculaire élevé est supérieur à 5 ;
(II) le premier composant de type polyéthylène de poids moléculaire élevé de la fraction A1 présente une masse volumique inférieure ou égale à 930 kg/$m^3$ et une viscosité intrinsèque inférieure à 15 dl/g ;
(III) la résine de base présente un indice de fluage $MFR_5$ inférieur ou égal à 0,40 g/10 min ; et
(IV) la composition présente une viscosité à une contrainte de cisaillement de 747 Pa (eta747) supérieure ou égale à 900 kPas.

**2.** Composition de polyéthylène selon la revendication 1, dans laquelle

(i) une quantité du premier composant de type polyéthylène de poids moléculaire élevé dans la résine de base est de 2 à 25 % en poids, de préférence de 3 à 20 % en poids, de manière davantage préférée de 5 à 18 % en poids, lequel premier composant de type polyéthylène de poids moléculaire élevé est un homo- ou un copolymère d'éthylène ayant au moins un comonomère de type alpha-oléfine en C3 à C20 ;
(ii) une quantité du composant de type polyéthylène de poids moléculaire bas dans la résine de base est de 30 à 70 % en poids, de préférence de 35 à 65 % en poids, de manière davantage préférée de 40 à 60 % en poids, lequel composant de type polyéthylène de poids moléculaire bas est un homo- ou co-polymère d'éthylène avec au moins un comonomère de type alpha-oléfine en C3 à C20 ; et
(iii) une quantité du second composant de type polyéthylène de poids moléculaire élevé dans la résine de base est de 25 à 60 % en poids, de préférence de 30 à 50 % en poids, de manière davantage préférée de 32 à 45 % en poids, lequel second composant de type polyéthylène de poids moléculaire élevé est un copolymère d'éthylène avec au moins un comonomère de type alpha-oléfine en C3 à C20.

**3.** Composition de polyéthylène selon la revendication 1 ou 2, dans laquelle le premier composant de type polyéthylène de poids moléculaire élevé et le composant de type polyéthylène de poids moléculaire bas sont des copolymères d'éthylène, de préférence dans laquelle le premier composant de type polyéthylène de poids moléculaire élevé, le composant de type polyéthylène de poids moléculaire bas et le second composant de type polyéthylène de poids moléculaire élevé sont des copolymères d'éthylène.

**4.** Composition de polyéthylène selon l'une quelconque des revendications précédentes, dans laquelle la résine de base présente une masse volumique de 935 à 965 kg/m3, de préférence de 940 à 960 kg/m3, de manière davantage

préférée de 945 à 955 kg/$m^3$, de manière encore plus préférée de 948 à 955 kg/m3.

**5.** Composition de polyéthylène selon l'une quelconque des revendications précédentes, dans laquelle une viscosité intrinsèque du premier composant de type polyéthylène de poids moléculaire élevé est supérieure ou égale à 4,0 dl/g, de préférence supérieure ou égale à 4,5 dl/g, de manière davantage préférée supérieure ou égale à 5 dl/g.

**6.** Composition de polyéthylène selon l'une quelconque des revendications précédentes, dans laquelle le poids moléculaire moyen en poids du premier composant de type polyéthylène de poids moléculaire élevé est supérieur au poids moléculaire moyen en poids du second composant de type polyéthylène de poids moléculaire élevé.

**7.** Composition de polyéthylène selon l'une quelconque des revendications précédentes, dans laquelle un poids moléculaire moyen en poids ($M_w$) du premier composant de type polyéthylène de poids moléculaire élevé est d'au moins 280 000 g/mol, de préférence d'au moins 310 000 g/mol ; et/ou dans laquelle un poids moléculaire moyen en poids ($M_w$) du premier composant de type polyéthylène de poids moléculaire élevé est d'au plus 10 000 000 g/mol, de préférence d'au plus 900 000 g/mol, de manière davantage préférée d'au plus 800 000 g/mol.

**8.** Composition de polyéthylène selon l'une quelconque des revendications précédentes, dans laquelle un poids moléculaire moyen en poids ($M_w$) calculé du composant de type polyéthylène de poids moléculaire bas est d'au moins 10 000 g/mol, de préférence d'au moins 15 000 g/mol, de manière davantage préférée d'au moins 20 000 g/mol ; et/ou dans laquelle un poids moléculaire moyen en poids ($M_w$) calculé du composant de type polyéthylène de poids moléculaire bas est d'au plus 60 000 g/mol.

**9.** Composition de polyéthylène selon l'une quelconque des revendications précédentes, dans laquelle un poids moléculaire moyen en poids ($M_w$) calculé du second composant de type polyéthylène de poids moléculaire élevé est d'au moins 280 000 g/mol, de préférence d'au moins 310 000 g/mol ; et/ou
dans laquelle un poids moléculaire moyen en poids ($M_w$)calculé du second composant de type polyéthylène de poids moléculaire élevé est d'au plus 1 000 000 g/mol, de préférence d'au plus 900 000 g/mol.

**10.** Composition de polyéthylène selon l'une quelconque des revendications précédentes, dans laquelle la composition de polymère comprenant une résine de base est polymérisée dans au moins un réacteur pour phase en suspension et au moins un réacteur pour phase gazeuse, de préférence dans laquelle la composition de polymère comprenant une résine de base est polymérisée dans deux réacteurs pour phase en suspension et un réacteur pour phase gazeuse, de manière davantage préférée dans laquelle le premier composant de type polyéthylène de poids moléculaire élevé de la fraction A1 et le composant de type polyéthylène de poids moléculaire bas de la fraction A2 sont polymérisés dans des réacteurs séquentiels pour phase en suspension, qui sont de préférence des réacteurs à boucle, et le second composant de type polyéthylène de poids moléculaire élevé de la fraction A3 est polymérisé dans un réacteur pour phase gazeuse.

**11.** Composition de polyéthylène selon l'une quelconque des revendications précédentes, dans laquelle la composition de polyéthylène présente une résistance aux chocs à 0 °C d'au moins 19 kJ/$m^2$, de préférence d'au moins 20 kJ/$m^2$, de manière davantage préférée d'au moins 21 kJ/$m^2$ dans un test Charpy avec entaille selon l'ISO 179/1eA:2000 ;

dans laquelle la composition de polyéthylène présente une viscosité à une contrainte de cisaillement de 747 PA (eta747) supérieure à 1 250 kPas ; et
dans laquelle la composition de polyéthylène présente une viscosité à une contrainte de cisaillement de 747 Pa (eta747) inférieure ou égale à 3 000 kPas, de préférence inférieure ou égale à 2 500 kPas, de manière davantage préférée inférieure ou égale à 2 200 kPas.

**12.** Composition de polyéthylène selon l'une quelconque des revendications précédentes, dans laquelle la résine de base présente un indice de fluage $MFR_{21}$ de 2,0 à 12,0 g/10 min, de préférence de 2,5 à 10,0 g/10 min, de manière davantage préférée de 3,0 à 9,0 g/10 min.

**13.** Composition de polyéthylène selon l'une quelconque des revendications précédentes, dans laquelle le premier composant de type polyéthylène de poids moléculaire élevé de la fraction A1 présente une masse volumique inférieure ou égale à 929 kg/$m^3$, de préférence inférieure ou égale à 928 kg/m3.

**14.** Article, tel qu'un tuyau ou un raccord, fait de la composition de polyéthylène telle que définie dans l'une quelconque des revendications précédentes.

**15.** Utilisation de la composition de polyéthylène telle que définie dans l'une quelconque des revendications précédentes pour la production d'un article.

**16.** Procédé de production d'une composition de polymère comprenant une résine de base, qui comprend les étapes suivantes

(a) la polymérisation d'éthylène et facultativement d'au moins un comonomère en présence d'un catalyseur de polymérisation pour former un premier composant de type polyéthylène de poids moléculaire élevé de fraction A1, dans lequel un poids moléculaire moyen en poids ($M_w$) du premier composant de type polyéthylène de poids moléculaire élevé est d'au moins 250 000 g/mole ; et la polymérisation d'éthylène et facultativement d'au moins un comonomère en présence d'un ou plusieurs catalyseurs de polymérisation identiques ou différents à celui lors de la polymérisation du premier composant de type polyéthylène de poids moléculaire élevé pour former un composant de type polyéthylène de poids moléculaire bas de fraction A2, dans lequel un poids moléculaire moyen en poids calculé ($M_w$) calculé du composant de type polyéthylène de poids moléculaire bas est d'au plus 70 000 g/mol ; et
(c) la polymérisation d'éthylène et facultativement d'au moins un comonomère en présence d'un ou de plusieurs catalyseurs de polymérisation identiques ou différents à celui lors de la polymérisation du premier composant de type polyéthylène de poids moléculaire élevé pour former un second composant de type polyéthylène de poids moléculaire élevé de fraction A3, dans lequel un poids moléculaire moyen en poids ($M_w$)calculé du second composant de type polyéthylène de poids moléculaire élevé est d'au moins 250 000 g/mol, mais le poids moléculaire moyen en poids du second composant de poids moléculaire élevé étant différent du poids moléculaire moyen en poids du premier composant de poids moléculaire élevé,

dans lequel

(i) au moins l'un parmi le ou les catalyseurs est un catalyseur de Ziegler-Natta (ZN) ;
(ii) le rapport du poids moléculaire moyen en poids et du poids moléculaire moyen en nombre ($M_w/M_n$) du premier composant de type polyéthylène de poids moléculaire élevé est supérieur à 5 ;
(iii) le premier composant de type polyéthylène de poids moléculaire élevé de la fraction A1 présente une masse volumique inférieure ou égale à 930 kg/$m^3$ et une viscosité intrinsèque inférieure ou égale à 15 dl/g ;
(iv) la résine de base présente un indice de fluage $MFR_5$ inférieur ou égal à 0,40 g/10 min ; et
(v) la composition présente une viscosité à une contrainte de cisaillement de 747 Pa (eta747) supérieure ou égale à 900 kPas.

**17.** Procédé selon la revendication 16, dans lequel le catalyseur de Ziegler-Natta (ZN) comprend un composé organique interne de formule (I) :

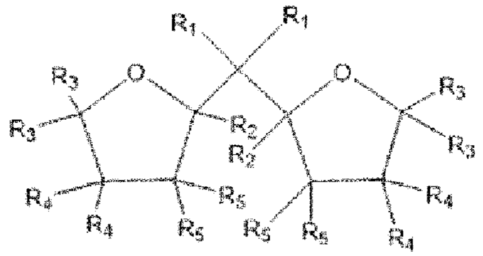

(I)

dans lequel, dans la formule (I), $R_1$ à $R_5$ sont identiques ou différents et peuvent être un hydrogène, un groupe alkyle en C1 à C8 linéaire ou ramifié, ou un groupe alkylène en C3 à C8, ou deux ou plus de deux parmi $R_1$ à $R_5$ peuvent former un cycle, et les deux cycles contenant de l'oxygène sont individuellement saturés ou partiellement insaturés ou insaturés.

**18.** Procédé selon la revendication 17, comprenant les étapes supplémentaires suivantes (a) la fourniture de particules solides de support de l'adduit $MgCl_2$*mROH ; (b) le prétraitement des particules solides de support de l'étape (a) avec un composé d'un métal du groupe 13 ; (c) le traitement des particules solides de support prétraitées de l'étape (b) avec un composé d'un métal de transition des groupes 4 à 6 ; (d) la récupération du composant catalytique solide ; (e) la mise en contact des particules solides de support avec le composé organique interne de formule (I) avant l'étape (c) ; et (f) le passage du composant catalytique solide dans la première étape de polymérisation, dans

lequel R dans l'adduit $MgCl_2$*mROH est un groupe alkyle linéaire ou ramifié ayant 1 à 12 atomes de carbone et m est un nombre de 0 à 6.

**19.** Procédé selon les revendications 16 à 18, dans lequel la composition de polymère comprenant une résine de base est polymérisée dans deux réacteurs pour phase en suspension et un réacteur pour phase gazeuse, de préférence dans lequel la composition de polymère comprenant une résine de base est polymérisée dans deux réacteurs pour phase en suspension et un réacteur pour phase gazeuse, de manière davantage préférée dans lequel le premier composant de type polyéthylène de poids moléculaire élevé de la fraction A1 et le composant de type polyéthylène de poids moléculaire bas de la fraction A2 sont polymérisés dans des réacteurs séquentiels pour phase en suspension, qui sont de préférence des réacteurs à boucle, et le second composant de type polyéthylène de poids moléculaire élevé de la fraction A3 est polymérisé dans un réacteur pour phase gazeuse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007042216 A
- WO 9618677 A
- WO 2006092378 A
- WO 9428064 A
- EP 2799487 A
- GB 2498936 A
- CN 103304869
- WO 200022040 A
- EP 2860204 A
- EP 2570455 A
- EP 376936 A
- EP 424049 A
- EP 655073 A
- EP 614467 A
- WO 9619503 A
- WO 9632420 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- US 4933149 A
- EP 684871 A
- WO 2005087361 A
- US 4578879 A
- EP 721798 A
- US 4543399 A
- EP 699213 A
- WO 9425495 A
- EP 696293 A
- WO 0105845 A
- EP 499759 A
- WO 0026258 A
- WO 0029452 A
- US 4621952 A
- EP 188125 A
- EP 250169 A
- EP 579426 A
- US 5026795 A
- US 4803251 A
- US 4532311 A
- US 4855370 A
- EP 560035 A
- EP 707513 A
- WO 02088194 A
- EP 683176 A
- EP 372239 A
- EP 47077 A
- GB 1272778 A
- EP 1600276 A


### Non-patent literature cited in the description


- **OGUNNIYI et al.** *Journal of Applied Polymer Science,* 2005, vol. 97, 413-425
- **VADHAR et al.** *Journal of Applied Polymer Science,* 1986, vol. 32, 5575-5584
- **HUANG ; BROWN.** *Polymer,* 1992, vol. 33, 2989-2997
- **GELDART ; BAYENS.** The Design of Distributors for Gas-fluidized Beds. *Powder Technology,* 1985, vol. 42
- **GELDART.** Gas Fluidization Technology. J.Wiley & Sons, 1986
- *Encyclopedia of Polymer Science and Engineering,* vol. 14, 492-509
- **MCAULEY, K. B ; MACGREGOR, J. F.** On-line inference of polymer properties in an industrial polyethylene reactor. *AIChE Journal,* 1991, vol. 37, 825-835